(19) Europäisches Patentamt
European Patent Office
Office européen des brevets

(11) EP 0 859 800 B1

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **96932549.7**

(22) Anmeldetag: **18.09.1996**

(51) Int Cl.7: **C08F 10/00**, C08F 4/02, C08F 4/64, C08F 110/06

(86) Internationale Anmeldenummer:
**PCT/EP96/04071**

(87) Internationale Veröffentlichungsnummer:
**WO 97/011775 (03.04.1997 Gazette 1997/15)**

(54) **GETRÄGERTES KATALYSATORSYSTEM, VERFAHREN ZU SEINER HERSTELLUNG UND SEINE VERWENDUNG ZUR POLYMERISATION VON OLEFINEN**

SUPPORTED CATALYST SYSTEM, PROCESS FOR ITS PRODUCTION AND ITS USE IN POLYMERISING OLEFINES

SYSTEME DE CATALYSEUR SUPPORTE, SON PROCEDE DE PRODUCTION ET SON UTILISATION DANS LA POLYMERISATION D'OLEFINES

(84) Benannte Vertragsstaaten:
**AT BE CH DE DK ES FI FR GB GR IE IT LI LU MC NL PT SE**

(30) Priorität: **28.09.1995 EP 95115278**

(43) Veröffentlichungstag der Anmeldung:
**26.08.1998 Patentblatt 1998/35**

(73) Patentinhaber:
- **Basell Polyolefine GmbH
50389 Wesseling (DE)**
- **ExxonMobil Chemical Patents Inc.
Baytown, TX 77520-5200 (US)**

(72) Erfinder:
- **FRITZE, Cornelia
D-60529 Frankfurt am Main (DE)**
- **BACHMANN, Bernd
D-65817 Eppstein (DE)**
- **KÜBER, Frank
D-61440 Oberursel (DE)**

(74) Vertreter: **Seelert, Stefan
Basell Polypropylen GmbH
Intellectual Property
F 206,
Carl-Bosch-Strasse 38
67056 Ludwigshafen (DE)**

(56) Entgegenhaltungen:
**EP-A- 0 416 928**
**EP-A- 0 485 820**
**EP-A- 0 498 603**
**EP-A- 0 619 326**
**EP-A- 0 629 632**
**EP-A- 0 748 824**
**WO-A-95/11263**
**WO-A-95/15815**
**GB-A- 2 124 240**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 859 800 B1

Printed by Jouve, 75001 PARIS (FR)

## Beschreibung

Die vorliegende Erfindung betrifft ein hochaktives geträgertes Katalysatorsystem, das vorteilhaft bei der Olefinpolymerisation eingesetzt werden kann und ein Verfahren zu seiner Herstellung.

Verfahren zur Herstellung von Polyolefinen mit Hilfe von löslichen, homogenen Katalysatorsystemen sind bekannt, bestehend aus einer Übergangsmetallkomponente vom Typ eines Metallocens und einer Cokatalysator-Komponente vom Typ eines Aluminoxans, einer Lewis-Säure oder einer ionischen Verbindung. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern.
Weiterhin sind homogene Katalysatorsysteme nicht für die Herstellung von Polyolefinen in der Gasphase einsetzbar.

Zur Vermeidung der Belagbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden.

Aus der EP 576 970 A1 ist ein Katalysatorsystem bekannt, das ein Metallocen der Formel

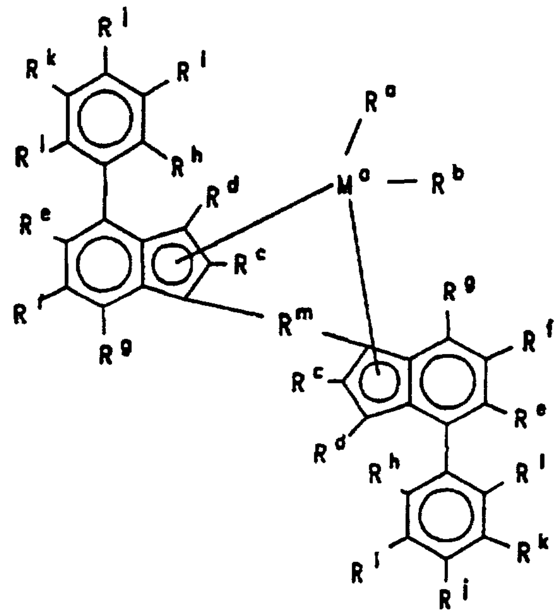

worin
$M^a$ ein Metall der Gruppe IVb, Vb oder VIb des Periodensystems ist,
$R^a$ und $R^b$ gleich oder verschieden sind und ein Wasserstoffatom, eine $C_1$-$C_{10}$-Alkyl-, eine $C_1$-$C_{10}$-Alkoxy-, eine $C_6$-$C_{10}$-Aryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, eine $C_8$-$C_{40}$-Arylalkenyl-, eine OH-Gruppe oder ein Halogenatom bedeuten,
die Reste $R^c$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, eine $-NR^p_2$, $-SR^p$, $-OSiR^p_3$-, $-SiR^p_3$- oder $-PR^p_2$-Rest bedeuten, worin $R^p$ ein Halogenatom, eine $C_1$-$C_{10}$-Alkylgruppe oder eine $C_6$-$C_{10}$-Arylgruppe ist,
$R^d$ bis $R^l$ gleich oder verschieden sind und die für $R^c$ genannten Bedeutungen besitzen, oder benachbarte Reste $R^d$ bis $R^l$ mit den sie verbindenden Atomen einen oder mehrere aromatische oder aliphatische Ringe bilden, oder die Reste $R^e$ und $R^h$ oder $R^l$ mit den sie verbindenden Atomen einen aromatischen oder aliphatischen Ring bilden,
$R^m$

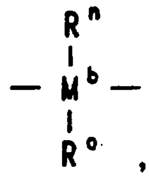, 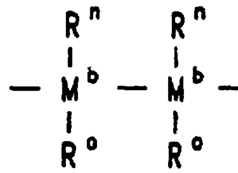, 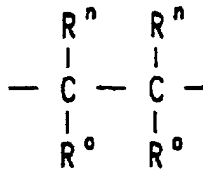, 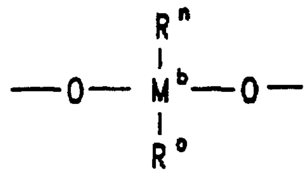,

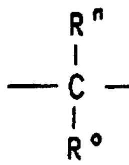, 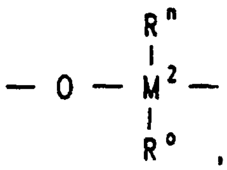, 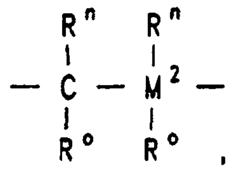, 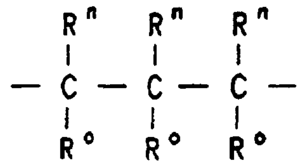,

$>BR^n$, $>AlR^n$, -Ge-, -Sn-, -O-, -S-, $>SO$, $>NR^n$, $>CO$, $>PR^n$ oder $>P(O)R^n$

ist, wobei $R^n$ und $R^o$ gleich oder verschieden sind und ein Wasserstoffatom, ein Halogenatom, eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, eine $C_8$-$C_{40}$-Arylalkenylgruppe bedeuten, oder $R^n$ und $R^o$ jeweils mit den sie verbindenden Atomen einen oder mehrere Ringe bilden und
$M^b$ Silizium, Germanium oder Zinn ist und einen geträgerten Cokatalysator enthält.
Mit diesem Katalysatorsystem wird ein isotaktisches Polypropylen mit einem Schmelzpunkt unterhalb von 157°C erhalten.

Aus der EP 287 666 B1 ist ein Verfahren zur Polymerisation von Olefinen in Gegenwart eines Katalysators bekannt, der aus einer Verbindung eines Übergangsmetalls, eines anorganischen Trägers, eines Aluminoxans und einer Organoaluminiumverbindung mit einer anderen Kohlenwasserstoffgruppe als n - Alkylgruppen als feste Katalysatorkomponente besteht, wobei die Übergangsmetallverbindung angegeben wird durch die Formel

$$R^q_k\, R^r_l\, R^s_m\, R^t_n\, Me,$$

worin $R^q$ eine Cycloalkadienylgruppe bedeutet, $R^r$, $R^s$ und $R^t$ gleich oder verschieden sind und jeweils eine Cycloalkadienylgruppe, eine Arylgruppe, eine Alkylgruppe, eine Arylalkylgruppe, ein Halogenatom oder ein Wasserstoffatom bedeuten, Me Zirkonium, Titan oder Hafnium bedeutet, k 1, 2, 3 oder 4 ist, l, m und n 0, 1, 2 oder 3 sind und k+l+m+n=4 ist.
Mit diesem Verfahren werden Polymere mit guten Ausbeuten erhalten.

Aus der EP 336 593 B1 ist ein Verfahren zur Herstellung eines mit einem Träger versehenen Metallocen/Aluminoxan-Katalysators zur Olefinpolymerisation bekannt, bei dem Aluminiumtrialkyl und Wasser in Gegenwart eines wasserabsorbierenden Feststoffmaterials mit einem Molverhältnis von Aluminiumtrialkyl zu Wasser von 10:1 bis 1:1 umgesetzt werden und ein Metallocen eines Übergangmetalls zu der umgesetzten Mischung gegeben wird, wobei das Wasser vor der Umsetzung durch das Feststoffmaterial in einer Menge von 10 bis 50 Gew.-% absorbiert wird, das wasserhaltige Feststoffmaterial zu einer Lösung von Aluminiumtrialkyl gegeben wird und das Molverhältnis von Aluminium zu Metallocen-Übergangsmetall 1000:1 bis 1:1 beträgt.

Mit diesem Verfahren wird der Cokatalysator auf dem Träger immobilisiert. Es wird ein vorteilhaftes Molverhältnis von Aluminium zu Metallocen-Übergangsmetall erhalten.

Aus DE 4330667 A1 ist ein Verfahren zur Herstellung von Katalysatorsystemen mit einem vorbehandelten Träger bekannt. Dabei wird das Trägermaterial mit einer Lösung von Triethylaluminium in Heptan umgesetzt. Bevorzugt werden Katalysatorsysteme mit einer Mischung aus mehreren Metallocenkomplexen und/oder eines Ziegler-Natta-Katalysatorsystems in der Polymerisation eingesetzt. Bei Verwendung von Metallocenkomplexen und Ziegler-Natta-Katalysatoren werden Polypropylene mit einem Schmelzpunkt von > 160°C erhalten. Polypropylene mit Schmelzpunkten < 150°C werden hergestellt, wenn nur Metallocene als Katalysatoren verwendet werden.

Die EP 619 326 A1 offenbart Katalysatorsysteme, bei denen als Träger calcinierte anorganische Feststoffe zum Einsatz kommen können.

Die Aufgabe der vorliegenden Erfindung liegt darin, ein hochaktives geträgertes Katalysatorsystem mit dem Polymere mit einer hohen Regio- und Stereoregularität erhalten werden und ein umweltschonendes und wirtschaftliches Verfahren zur Herstellung der Polymere bereitzustellen.

Die der vorliegenden Erfindung zugrundeliegende Aufgabe wird durch ein Katalysatorsystem gelöst, enthaltend mindestens ein spezielles Metallocen, mindestens einen Cokatalysator und mindestens ein inertisiertes anorganisches Oxid als Träger, wobei das inertisierte anorganische Oxid erhältlich ist durch

a) Trocknung bei 100°C bis 800°C bei 0,01 bar bis 0,001 bar oder bei 100°C bis 800°C im Inertgasstrom für 5-15 h, um physisorbiertes Wasser so zu entfernen, daß das so getrocknete Trägermaterial < 1,5 Gew.-% Wasser und 0,1 bis 6 Gew.-% Silanolgruppen enthält, und

b) Umsetzung des so erhaltenen Produkts mit mindestens einer metallorganischen Verbindung.

Das Katalysatorsystem wird erfindungsgemäß hergestellt, in dem das Metallocen und der inertisierte Träger gemischt werden.

Als Metallocenkomponente des erfindungsgemäßen Katalysatorsystems kommen Metallocene der Gruppe IVb des Periodensystems der Elemente, wie Titan, Zirkonium oder Hafnium, bevorzugt Zirkonium, zum Einsatz.

Es handelt sich um Metallocene der nachstehenden Formel I

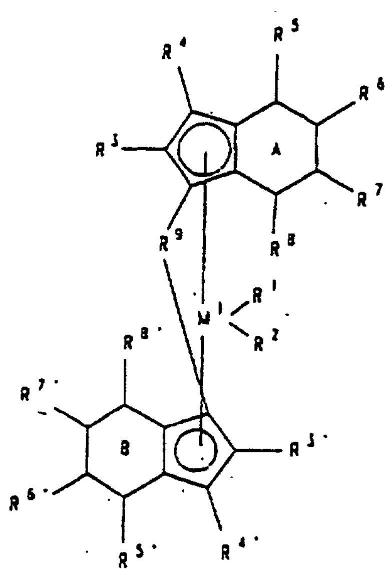

(I)

worin

| | |
|---|---|
| $M^1$ | ein Metall der Gruppe IVb des Periodensystems der Elemente ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{20}$-Arylgruppe, eine $C_6$-$C_{10}$-Aryloxygruppe, eine $C_2$-$C_{10}$-Alkenylgruppe, eine OH-Gruppe, eine $NR^{12}{}_2$-Gruppe, wobei $R^{12}$ eine $C_1$ bis $C_2$ Alkylgruppe oder $C_6$ bis $C_{14}$-Arylgruppe ist, oder ein Halogenatom bedeuten, |
| $R^3$ bis $R^8$ und $R^{3'}$ bis $R^{8'}$ | gleich oder verschieden sind und ein Wasserstoffatom, eine $C_1$-$C_{40}$-Kohlenwasserstoffgruppe, die linear, cyclisch oder verzweigt sein kann, z.B. eine $C_1$-$C_{10}$-Alkylgruppe, $C_2$-$C_{10}$-Alkenylgruppe, $C_6$-$C_{20}$-Arylgruppe, eine $C_7$-$C_{40}$-Arylalkylgruppe, eine $C_7$-$C_{40}$-Alkylarylgruppe oder eine $C_8$-$C_{40}$-Arylalkenylgruppe, bedeuten, oder benachbarte Reste $R^4$ bis $R^8$ und/oder $R^{4'}$ bis $R^{8'}$ mit den sie verbindenden Atomen ein Ringsystem bilden, |
| $R^9$ | eine Verbrückung bedeutet, bevorzugt |

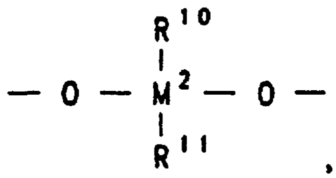 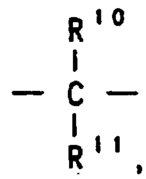 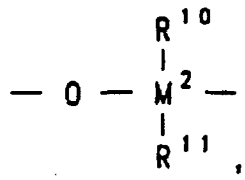 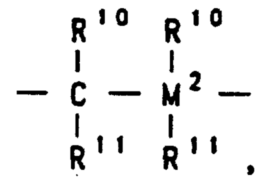

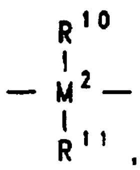 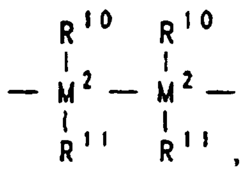 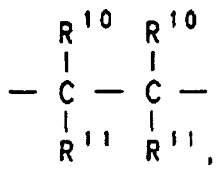 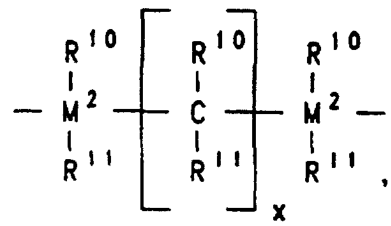

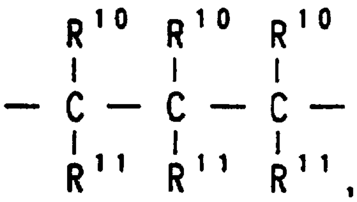

$>BR^{10}$, $>AlR^{10}$, $-Ge-$, $-O-$, $-S-$, $>SO$, $>SO_2$, $>NR^{10}$, $>CO$, $>PR^{10}$ oder $>P(O)R^{10}$,

wobei $R^{10}$ und $R^{11}$ gleich oder verschieden sind und ein Wasserstoffatom, ein Halogenatom oder eine $C_1$-$C_{40}$-kohlenstoffhaltige Gruppe ist wie eine $C_1$-$C_{20}$-Alkyl-, eine $C_1$-$C_{10}$-Fluoralkyl-, eine $C_1$-$C_{10}$-Alkoxy-, eine $C_6$-$C_{14}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe oder $R^{10}$ und $R^{11}$ jeweils mit den sie verbindenden Atomen einen oder mehrere Ringe bilden und x eine ganze Zahl von Null bis 18 ist,
$M^2$ Silizium, Germanium oder Zinn ist, und die Ringe A und B gleich oder verschieden, gesättigt oder ungesättigt sind.
$R^9$ kann auch zwei Einheiten der Formel I miteinander verknüpfen.

Die den Verbindungen I entsprechenden 4,5,6,7-Tetrahydroindenylanaloga sind ebenfalls von Bedeutung.

In Formel I gilt bevorzugt, daß

| | |
|---|---|
| $M^1$ | Zirkonium ist, |
| $R^1$ und $R^2$ | gleich sind und für Methyl oder Chlor, insbesondere Chlor, stehen und $R^9 = M^2R^{10}R^{11}$ ist, worin $M^2$ Silizium oder Germanium ist und $R^{10}$ sowie $R^{11}$ eine $C_1$-$C_{20}$-Kohlenwasserstoffgruppe, wie $C_1$-$C_{10}$-Alkyl oder $C_6$-$C_{14}$-Aryl ist, |
| $R^5$ und $R^{5'}$ | bevorzugt gleich oder verschieden sind und eine $C_6$-$C_{10}$-Arylgruppe, eine $C_7$-$C_{10}$-Arylalkylgruppe, eine $C_7$-$C_{40}$-Alkylarylgruppe oder eine $C_8$-$C_{40}$- Arylalkenylgruppe bedeuten. |

Die Indenyl- bzw. Tetrahydroindenylliganden der Metallocene der Formel I sind in 2-, 2,4-, 4,7-, 2,6-, 2,4,6-, 2,5,6-, 2,4,5,6- und 2,4,5,6,7-Stellung, insbesondere in 2,4-Stellung, substituiert. Bevorzugte Substituenten sind eine $C_1$-$C_4$-Alkylgruppe wie z. B. Methyl, Ethyl oder Isopropyl oder eine $C_6$-$C_{10}$-Arylgruppe wie Phenyl, Naphthyl oder Mesityl, Die 2-Stellung ist bevorzugt durch eine $C_1$-$C_4$-Alkylgruppe, wie z.B. Methyl oder Ethyl substituiert.

Besonders bevorzugt sind Zirconocene, die Tetrahydroindenylderivate und Indenylderivate als Liganden tragen.

Von besonderer Bedeutung sind weiterhin Metallocene der Formel I, bei denen die Substituenten in 4- und 5-Stellung der Indenylreste ($R^5$ und $R^6$ sowie $R^{5'}$ und $R^{6'}$) zusammen mit den sie verbindenden Atomen ein Ringsystem bilden, bevorzugt einen Sechsring. Dieses kondensierte Ringsystem kann ebenfalls durch Reste in der Bedeutung von $R^3$ - $R^8$ substituiert sein. Beispielhaft für solche Verbindungen I ist Dimethylsilandiylbis(2-methyl-4,5-benzoindenyl) zirkoniumdichlorid zu nennen.

Insbesondere bevorzugt sind solche Verbindungen der Formel I, die in 4-Stellung eine $C_6$-$C_{20}$-Arylgruppe und in 2-Stellung eine $C_1$-$C_4$-Alkylgruppe tragen. Beispielhaft für solche Verbindungen der Formel I ist Dimethylsilandiylbis(2-methyl-4-phenylindenyl)zirkoniumdichlorid.

Beispiele für die Metallocenkomponente des erfindungsgemäßen Katalysatorsystems sind:

Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4-α-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4, 5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-Trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdichlorid
Methyl(phenyl)silandiylbis(2-methyl-4,5-(tetramethylbenzo)-indenyl)zirkoniumdichlorid
Methyl(phenyl)silandiylbis(2-methyl-4-α-acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1, 2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4, 6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4, 5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis (2-methyl-indenyl)zirkoniumdichlorid
Bis(butylcyclopentadienyl)$Zr^+CH_2CHCHCH_2B^-(C_6F_5)_3$
Bis(methylindenyl)$Zr^+CH_2CHCHCH_2B^-(C_6F_5)_3$
Dimethylsilandiybis(2-methyl-4,5-benzo-indenyl)$Zr^+CH_2CHCHCH_2B^-(C_6F_5)_3$
1,2-Ethandiylbis(2-methyl-indenyl)$Zr^+CH_2CHCHCH_2B^-(C_6F_5)_3$
1,4-Butandiylbis(2-methyl-indenyl)$Zr^+CH_2CHCHCH_2B^-(C_6F_5)_3$
Dimethylsilandiylbis(2-methyl-4,6 diisopropyl-indenyl)-$Zr^+CH_2CHCHCH_2B^-(C_6F_5)_3$
Dimethylsilandiylbis(2-ethyl-4-phenyl-indenyl)-$Zr^+CH_2CHCHCH_2B^-(C_6F_5)_3$
Dimethylsilandiylbis(2-methyl-4-phenyl-indenyl)-$Zr^+CH_2CHCHCH_2B^-(C_6F_5)_3$
Methyl(phenyl)silandiylbis(2-methyl-4-phenyl-indenyl)-$Zr^+CH_2CHCHCH_2B^-(C_6F_5)_3$
Dimethylsilandiylbis(2-methyl-indenyl)-$Zr^+CH_2CHCHCH_2B^-(C_6F_5)_3$
Dimethylsilandiylbis(indenyl)-$Zr^+CH_2CHCHCH_2B^-(C_6F_5)_3$
Dimethylsilandiyl(tert.-Butylamido)(tetramethylcyclopentadienyl)-zirkoniumdichlorid

[Tris(pentafluorophenyl)(cyclopentadienylidenlborato](cyclopentadienyl)-1,2,3,4-tetraphenylbuta-1,3-dienylzirkonium
Dimethylsilandiyl-[tris(pentafluorophenyl)(2-methyl-4-phenylindenyliden)borato](2-methyl-4-phenylindenyl)-1,2,3,4-tetraphenylbuta-1,3-dienylzirkonium
Dimethylsilandiyl-[tris(trifluoromethyl)(2-methylbenzindenyliden)borato](2-methylbenzindenyl-)-1,2,3,4-tetraphenylbuta-1,3-dienylzirkonium
Dimethylsilandiyl-[tris(pentafluorophenyl)(2-methyl-indenyliden)borato](2-methyl-indenyl)-1,2,3,4-tetraphenylbuta-1,3-dienylzirkonium
Dimethylsilandiylbis(indenyl)zirkoniumdimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-α-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumd imethyl
Dimethylsilandiylbis(2-ethyl-4-phenyl-indenyl)zirkoniumdimethyl
Dimethylsilandiybis(2-methyl-4,5-benzo-indenyl)zirkoniumdimethyl
Dimethylsilandiylbis(2-methyl-4,6 diisopropyl-indenyl)zirkoniumdimethyl
Dimethylsilandiylbis(2-methyl-4,5 diisopropyl-indenyl)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkoniumdimethyl
Dimethylsilandiylbis(2-methyl-5-t-butyl-indenyl)zirkoniumdimethyl
Methyl(phenyl)silandiylbis(2-methyl-4-phenyl-indenyl)zirkoniumdimethyl
Methyl(phenyl)silandiylbis(2-methyl-4, 6 diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4,5-benzo-indenyl)zirkoniumdimethyl
Methyl(phenyl)silandiylbis(2-methyl-4,5-(methylbenzo)-indenyl)zirkoniumdimethyl
Methyl(phenyl)silandiylbis(2-methyl-4, 5-(tetramethylbenzo)-indenyl)zirkoniumdimethyl
Methyl(phenyl)silandiylbis(2-methyl-4-α-acenaphth-indenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
1,2-Ethandiylbis(2-methyl-4-phenyl-indenyl)zirkoniumdimethyl
1,4-Butandiylbis(2-methyl-4-phenyl-indenyl)zirkoniumdimethyl
1,2-Ethandiylbis(2-methyl-4,6 diisopropyl-indenyl)zirkoniumdimethyl
1,4-Butandiylbis(2-methyl-4-isopropyl-indenyl)zirkoniumdimethyl
1,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethyl-indenyl)zirkoniumdimethyl
1,2-Ethandiylbis(2-methyl-indenyl)zirkoniumdimethyl
1,4-Butandiyibis(2-methyl-indenyl)zirkoniumdimethyl

Besonders bevorzugt sind:

Dimethylsilandiylbis(2-methyl-indenyl)zirkoniumdichlorid,
Dimethylsilandiylbis(2-methyl-4-(1-naphthyl)-indenyl)zirkoniumdichlorid,
Dimethylsilandiylbis(2-methyl-4-phenyl-indenyl)zirkoniumdichlorid,
Dimethylsilandiylbis(2-methyl-4-α-acenaphth-indenyl)zirkoniumdichlorid,
Dimethylsilandiylbis(2-ethyl-4-phenyl-indenyl)zirkoniumdichlorid,
Dimethylsilandiybis(2-methyl-4,5-benzo-indenyl)zirkoniumdichlorid,

Dimethylsilandiylbis(2-methyl-4,6-diisopropyl-indenyl)zirkoniumdichlorid.

Herstellungsverfahren für Metallocene der Formel I sind z.B. in Journal of Organometallic Chem. 288 (1985) 63 - 67 und der dort zitierten Dokumente beschrieben.

Das erfindungsgemäße Katalysatorsystem enthält vorzugsweise zusätzlich mindestens einen Cokatalysator.

Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel II

$$(R\ AlO)_n \qquad (II)$$

verwendet. Aluminoxane können z.B. cyclisch wie in Formel III

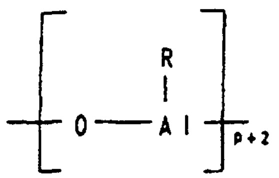

(III)

oder linear wie in Formel IV

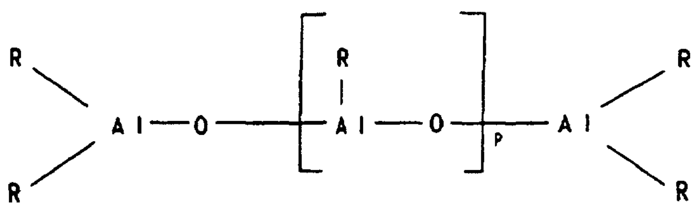

(IV)

oder vom Cluster-Typ wie in Formel V sein, wie sie in neuerer Literatur beschrieben werden; vgl. JACS 117 (1995), 6465-74, Organometallics 13 (1994), 2957-2969.

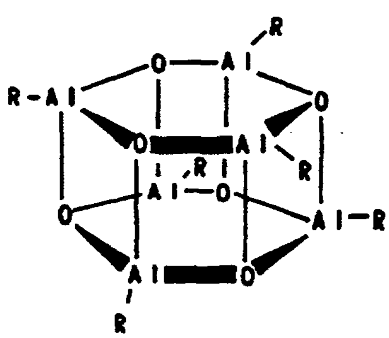

(V)

Die Reste R in den Formeln (II), (III), (IV) und (V) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird. Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyl- oder Halogenalkyl, wie z. B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl,
3,5-Difluorophenyl, Pentachlorophenyl, Pentafluorophenyl, 3,4,5 Trifluorophenyl und 3,5 Di(trifluoromethyl)phenyl.

Besonders bevorzugt sind bororganische Verbindungen.
Beispiele für Lewis-Säuren sind Trifluoroboran, Triphenylboran,
Tris(4-fluorophenyl)boran, Tris(3,5-difluorophenyl)boran,
Tris(4-fluoromethylphenyl)boran, Tris(pentafluorophenyl)boran,
Tris(tolyl)boran, Tris(3,5-dimethylphenyl)boran,
Tris(3,5-difluorophenyl)boran und/oder Tris(3,4,5-trifluorophenyl)boran.
Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6^{\ominus}$, $CF_3SO_3^{\ominus}$ oder $ClO_4^{\ominus}$. Als kationisches Gegenion werden Lewis-Basen wie z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.
Es können auch Gemische mindestens einer Lewis-Säure und mindestens einer ionischen Verbindung eingesetzt

werden.

Als Cokatalysatorkomponenten sind ebenfalls Boran- oder Carboran-Verbindungen wie z.B. 7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat)cobaltate(III),
Tri(butyl)ammoniumbis(undecahydrid-7,8-dicarbaundecaborat)ferrat(III) von Bedeutung.

Die Trägerkomponente des erfindungsgemäßen Katalysatorsystems ist ein inertisierter Träger, bevorzugt mindestens ein anorganisches Oxid, wie z.B. Siliciumoxid, Aluminiumoxid, Zeolithe, MgO, $ZrO_2$, $TiO_2$, $B_2O_3$, CaO, ZnO, $ThO_2$, $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$, $Li_2O$ insbesondere Siliziumoxid und/oder Aluminiumoxid. Der Träger weist dadurch eine spezifische Oberfläche im Bereich von 10 bis 1000 $m^2/g$, bevorzugt von 150 bis 500 $m^2/g$, besonders bevorzugt von 200 bis 400 $m^2/g$ auf. Die mittlere Partikelgröße des Trägers ist von 1 bis 500 µm, bevorzugt von 5 bis 350 µm, besonders bevorzugt von 10 bis 200 µm. Das Porenvolumen des Trägers ist von 0,5 bis 4,0 ml/g, bevorzugt von 1,0 bis 3,5 ml/g, ganz besonders bevorzugt von 1,2 bis 3 ml/g. Diese Trägerkomponente ist mit mindestens einer metallorganischen, bevorzugt aluminiumorganischen Verbindung inertisiert. Die poröse Struktur des Trägers bewirkt einen Anteil an Hohlräumen (Porenvolumen) im Trägerpartikels, des Trägermaterials oder des Träger-Formkörpers.

Die Form der Poren ist unregelmäßig, häufig sphärisch ausgebildet. Die Poren sind durch kleine Porenöffnungen miteinander z. T. verbunden. Der Porendurchmesser beträgt etwa 2 bis 50 nm.

Die Partikelform des porösen Trägers ist abhängig von der Nachbehandlung und kann irregulär oder sphärisch sein. Die Träger-Teilchengrößen können z. B. durch kryogene Mahlung und/oder Siebung beliebig eingestellt werden.

Der erfindungsgemäße inertisierte Träger enthält ein Produkt aus einem,oder mehreren anorganischen Oxiden, bevorzugt Siliziumoxid und/oder Aluminiumoxid sowie eine metallorganischen, bevorzugt aluminiumorganischen Verbindung.

Erfindungsgemäß ist auch vorgesehen, daß das Trägermaterial auf Temperatura $< 800°C$ erhitzt oder dessen Oberfläche silanisiert oder verestert wird. Der erfindungsgemäße Träger wird bei 100°C bis 800°C bei 0.01 bar bis 0.001 bar oder bei 100°C bis 800°C im Inertgasstrom für 5-15 h getrocknet, um physisorbiertes Wasser zu entfernen. Das getrocknete Trägermaterial enthält < 1.5 Gew % Wasser und 0.1 bis 6 Gew % Silanolgruppen. Der Wassergehalt wird durch die Gewichtsreduktion nach einer Trocknung bei 200°C, für 4 h bestimmt. Der Anteil an Silanolgruppen auf der Oberfläche kann durch DTA (Differentielle Thermogravimetrische Analyse) oder nach folgender Formel bestimmt werden. Gew% = [($SiO_2$ getrocknet bei 200°C, 4 h) - ($SiO_2$ getrocknet bei 1000°C, 20 h)] / ($SiO_2$ getrocknet bei 200°C, 4 h) • 100.

Das so getrocknete Trägermaterial wird mit mindestens einer metallorganischen Verbindung umgesetzt. Die metallorganische Verbindung ist bevorzugt eine aluminiumorganische Verbindung. Insbesondere bevorzugt sind lineare, cyclische oder verzweigte, gesättigte oder ungesättigte $C_1$-$C_9$-Kohlenstoffhaltige Gruppen enthaltende aluminiumorganischen Verbindungen, wie Trimethylaluminium, Triethylaluminium, Triisobutylaluminium, Methylaluminoxan, Tripropylaluminium, Tri-n-butylaluminium, Tri-sec-butylaluminium, Isobutylaluminoxan, Trihexylaluminium, Tridodecylaluminum, Triphenylaluminum, Butylaluminoxan, Tri(cyclohexyl)aluminium, Dimethylaluminiummethoxid, Diethylaluminumethoxid, Diisobutylaluminiummethoxid, Diethylaluminumtrimethylsilyloxid, Lithiumbutyldiisobutylaluminium, Lithiumtri-tert-butoxyaluminium, Lithium-tert-butyldiisobutylaluminium und/oder Diisobutylaluminumtrimethylsilyloxid. Weiter vorgesehen sind Magnesium- oder bororganische Verbindungen wie z. B. Diethylmagnesium, Diisopropylmagnesium, Dipropylmagnesium, Dibutylmagnesium, Dioctylmagnesium, Dihexylmagnesium, Didodecylmagnesium, Dicyclohexylmagnesium, Dibenzylmagnesium, Ditolylmagnesium, Dixylylmagnesium, Ethylmagnesiumethoxid, Octylmagnesiumethoxid, Octylmagnesiumoctoxid, Ethylpropylmagnesium, Ethylbutylmagnesium, Amylhexylmagnesium, n-Butyl-sec-butylmagnesium, Butyloctylmagnesium, Triethylboran, Triisobutylboran, Tripropylboran, Tri-n-butylboran, Tri-secbutylboran, Trihexylboran, Triphenylboran, Tri(cyclohexyl)boran, Dimethylmethoxyboran, Diisobutylmethoxyboran, Diethyltrimethylsilyloxyboran, Lithiumbutyldiisobutylboran, Lithiumtri-tert-butoxyboran, Lithium-tertbutyldiisobutylboran, 2-Biphenylboronsäure, Tris(trimethylsilylmethyl)boran und/oder Phenylboronsäure.

Ganz besonders bevorzugt verwendet werden Trimethylaluminium, Tributylaluminium, Triethylboran und/oder Tributylboran nicht aber Triethylaluminium.

Die Inertisierung des Trägers erfolgt in der Weise, daß man das Trägermaterial in einem geeigneten Lösungsmittel, wie Pentan, Hexan, Heptan, Toluol oder Dichlormethan, suspendiert und zu dieser Suspension eine Lösung der aluminiumorganischen Verbindung, z.B. eine Aluminiumalkyl-Lösung, langsam zutropfen läßt und durch Verrühren zur Reaktion bringt oder man zum trocknen Trägermaterial unter Rühren eine Lösung der aluminiumorganischen Verbindung, z.B. eine Aluminiumalkyl-Lösung, langsam zutropfen läßt und erst dann mit einem geeigneten Lösungsmittel eine Suspension herstellt.
Die Reaktionstemperatur beträgt bevorzugt -20 bis + 150°C, insbesondere 15-40°C. Die Reaktionszeit beträgt 1 bis 120 Minuten, bevorzugt 10-30 Minuten. Es wird vorzugsweise bei einer Aluminiumkonzentration von größer 0,01 mol/Liter, insbesondere größer 0,5 mol/Liter gearbeitet. Verwendet werden bevorzugt 0,01 bis 0,1 mol Aluminium-Verbindung pro g Trägermaterial.
Die Reaktion wird unter Inertbedingungen durchgeführt.

Danach wird vom Lösungsmittel getrennt. Der Rückstand zweimal mit einem geeigneten Lösungsmittel wie Pentan, Hexan, Heptan, Toluol oder Dichlormethan, gewaschen und gegebenenfalls im Ölpumpenvakuum bei 20 bis 40°C und 0.01 bis 0.001 bar getrocknet. Man erhält einen erfindungsgemäßen inertisierten Träger, der dadurch charakterisiert ist, daß dessen Anteil an Hydroxylgruppen auf der Trägeroberfläche die durch die zuvor beschriebene Behandlung reduziert worden ist. Der Anteil an Silanolgruppen auf einer inertisierten Silicaoberfläche ist z. B. auf < 2 Gew%, bevorzugt < 1.5 Gew% gesunken.

Erfindungsgemäß bedeutet der Ausdruck inertisierter Träger einen Träger, der wie vorstehend beschreiben behandelt worden ist.

Zur Herstellung des erfindungsgemäßen Katalysatorsystems wird die inertisierte Trägerkomponente mit mindestens einer Metallocen- und bevorzugt mit mindestens einer Cokatalysatorkomponente umgesetzt. Die Reihenfolge der Umsetzung ist dabei unerheblich. Die Umsetzung erfolgt in einem geeigneten Lösungsmittel wie Pentan, Heptan, Toluol, Dichlormethan oder Dichlorbenzol, in dem die inertisierte Trägerkomponente suspendiert wird und eine Lösung der Metallocen- und Cokatalysatorkomponente zugetropft wird oder bevorzugt so, daß 110 bis 370 % des Porenvolumens der Trägerkomponente als Lösung der Metallocen- und Cokatalysatorkomponente insgesamt zugegeben werden. Die Herstellung des erfindungsgemäßen Katalysatorsystems wird bei -20 bis 150°C, bevorzugt bei 20 bis 50°C und einer Kontaktzeit zwischen 15 Minuten und 25 Stunden, bevorzugt zwischen 15 Minuten und 5 Stunden durchgeführt.

Man erhält das erfindungsgemäße Katalysatorsystem mit einem Metallocengehalt, bevorzugt Zirkoniumgehalt von 0.001 bis 2 mmol $Zr/g_{Träger}$, bevorzugt von 0.01 bis 0.5 mmol $Zr/g_{Träger}$, besonders bevorzugt 0.01 bis 0.1 mmol $Zr/g_{Träger}$ und einem Aluminiumgehalt von 0.001 bis 0.1 mol $Al/g_{Träger}$, bevorzugt von 1 bis 50 mmol $Al/g_{Träger}$. Das Aluminium/Zirkoniumverhältnis liegt von 50 : 1 bis 1000 : 1 (Al : Zr), bevorzugt von 400 : 1 bis 700 : 1 (Al:Zr).

Mit dem erfindungsgemäßen Katalysatorsystem werden Polymere, wie Polypropylen mit außerordentlich hoher Stereo- und Regiospezifität erhalten.

Besonders charakteristisch für die Stereo- und Regiospezifität von Polymeren, insbesondere von Polypropylen, ist z.B. die Triaden-Taktizität (TT) und der Anteil an 2-1-insertierten Propeneinheiten (RI), die sich aus den $^{13}C$-NMR-Spektren ermitteln lassen.

Die $^{13}C$-NMR- Spektren werden in einem Gemisch aus Hexachlorbutadien und Tetrachlorethan-$d_2$ bei erhöhter Temperatur (365 K) gemessen. Alle $^{13}C$-NMR-Spektren der gemessenen Polypropylen-Proben werden auf das Resonanzsignal von Tetrachlorethan-$d_2$ ($\delta$ = 73.81 ppm) geeicht.

Zur Bestimmung der Triaden-Taktizität des Polypropylens werden die Methyl-Resonanzsignale im $^{13}C$-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm - Triade ($\delta$ = 21.0 ppm bis 22.0 ppm). Zeigt nur die zweite Methylgruppe der drei aufeinander folgenden Propeneinheiten zur anderen Seite, spricht man von einer rr-Triade ($\delta$ = 19.5 ppm bis 20.3 ppm) und zeigt nur die dritte Methylgruppe der drei aufeinander folgenden Propeneinheiten zur anderen Seite, von einer mr-Triade ($\delta$ = 20.3 ppm bis 21.0 ppm). Die Triaden-Taktizität berechnet man nach folgender Formel:

$$TT (\%) = mm / (mm + mr + rr) \cdot 100$$

Wird eine Propeneinheit invers in die wachsende Polymerkette insertiert, spricht man von einer 2-1-Insertion; vgl. T. Tsutsui, N. Ishimaru, A. Mizuno, A. Toyota, N. Kashiwa, Polymer 30, (1989), 1350-56. Folgende verschiedene strukturelle Anordnungen sind möglich:

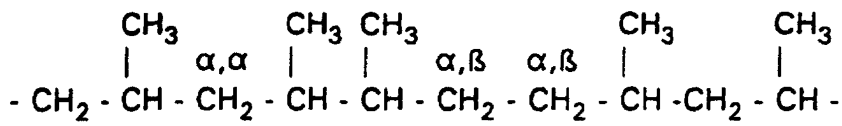

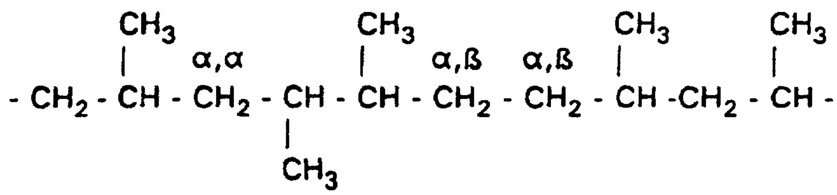

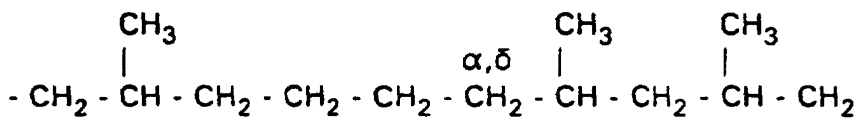

Der Anteil an 2-1-insertierten Propeneinheiten (RI) kann nach folgender Formel berechnet werden:

$$RI\ (\%) = 0.5\ I\alpha,\beta\ (I\alpha,\alpha + I\alpha,\beta + I\alpha,\delta) \bullet 100,$$

wobei

$I\alpha,\alpha$ die Summe der Intensitäten der Resonanzsignale bei $\delta$ = 41.84, 42.92 und 46.22 ppm,
$I\alpha,\beta$ die Summe der Intensitäten der Resonanzsignale bei $\delta$ = 30.13, 32.12, 35.11 und 35.57 ppm

sowie

$I\alpha,\delta$ die Intensität des Resonanzsignals bei $\delta$ = 37.08 ppm bedeuten.

Eine besonders hohe Regiospezifität bedingt auch einen besonders hohen Schmelzpunkt des Polymers, insbesondere des isotaktischen Polypropylens. Das isotaktische Polypropylen, das mit dem erfindungsgemäßen Katalysatorsystem hergestellt worden ist, zeichnet sich durch einen Anteil an 2-1-insertierten Propeneinheiten RI < 0.2%, vorzugsweise < 0.1 % bei einer Triaden-Taktizität TT > 98.0% und einen Schmelzpunkt > 158°C, vorzugsweise > 160°C aus, wobei $M_w/M_n$ des erfindungsgemäßen Polypropylens zwischen 2.5 und 3.5 liegt.

Die vorliegende Erfindung betrifft auch ein Verfahren zur Herstellung eines Polyolefins durch Polymerisation eines oder mehrerer Olefine in Gegenwart des erfindungsgemäßen Katalystorsystems, enthaltend mindestens einen inertisierten Trägers. Unter dem Begriff Polymerisation wird eine Homopolymerisation wie auch eine Copolymerisation verstanden.

Bevorzugt werden Olefine der Formel $R^u$-CH =CH-$R^v$ polymerisiert, worin $R^u$ und $R^v$ gleich oder verschieden sind und ein Wasserstoffatom oder einen kohlenstoffhaltigen Rest mit 1 bis 20 C-Atomen, insbesondere 1 bis 10 C-Atomen, bedeuten, und $R^u$ und $R^v$ zusammen mit den sie verbindenen Atomen einen oder mehrere Ringe bilden können. Beispiele für solche Olefine sind 1-Olefine mit 2 bis 40, vorzugsweise 2 bis 10 C-Atomen, wie Ethylen, Propen, 1-Buten, 1-Penten, 1-Hexen, 4-Methyl-1-penten oder 1-Octen, Styrol, Diene wie 1,3-Butadien, 1,4-Hexadien, Vinylnorbornen oder Norbornadien und cyclische Olefine wie Norbornen, Tetracyclododecen oder Methylnorbornen. Bevorzugt werden in dem erfindungsgemäßen Verfahren Ethen oder Propen homopolymerisiert, oder Ethen mit einem oder mehreren 1-Olefinen mit 3 bis 20 C-Atomen, wie Propen, und/oder einem oder mehreren Dienen mit 4 bis 20 C-Atomen, wie 1,4-Butadien oder Norbornadien, copolymerisiert. Beispiele solcher Copolymere sind Ethen/Propen-Copolymere und Ethen/Propen/1,4-Hexadien-Copolymere.

Die Polymerisation wird bevorzugt bei einer Temperatur von -60 bis 250°C, besonders bevorzugt 50 bis 200°C,

durchgeführt. Der Druck beträgt bevorzugt 0,5 bis 2000 bar, besonders bevorzugt 5 bis 64 bar.

Die Polymerisationszeit beträgt von 10 Minuten bis 10 Stunden, bevorzugt von 30 Minuten bis 120 Minuten.

Die Polymerisation kann in Lösung, in Masse, in Suspension oder in der Gasphase, kontinuierlich oder diskontinuierlich, ein- oder mehrstufig durchgeführt werden.

Bevorzugt enthält das in dem erfindungsgemäßen Verfahren eingesetzte Katalysatorsystem eine Übergangsmetallverbindung der Metallocenkomponente. Es können auch Mischungen zweier oder mehrerer Übergangsmetallverbindungen der Metallocenkomponente eingesetzt werden, z.B. zur Herstellung von Polyolefinen mit breiter oder multimodaler Molmassenverteilung und sogenannten Reaktorblends.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Das geträgerte Katalysatorsystem kann als Pulver oder noch mit Lösemittel behaftet in einem inerten Suspensionsmittel wieder resuspendiert werden. Die Suspension kann in das Polymerisationssystem eingeführt werden.

Vor der Zugabe des erfindungsgemäßen geträgerten Katalysatorsystems in das Polymerisationsystem ist eine Reinigung des Olefins mit einer Aluminiumalkylverbindung, wie beispielsweise Trimethylaluminium, Triethylaluminium, Triisobutylaluminium, Trioctylaluminium, Isoprenylaluminium oder Aluminoxane zur Inertisierung des Polymerisationssystems (beispielsweise zur Abtrennung vorhandener Katalysatorgifte im Olefin) vorteilhaft. Diese Reinigung kann sowohl im Polymerisationssystem selbst erfolgen, oder das Olefin wird vor der Zugabe in das Polymerisationsystem mit der Al-Verbindung in Kontakt gebracht und anschließend wieder getrennt. Wird diese Reinigung im Polymerisationssystem selbst durchgeführt, wird die Aluminiumalkylverbindung in einer Konzentration von 0,01 bis 100 mmol Al pro kg Reaktorinhalt dem Polymerisationssystem zugesetzt. Bevorzugt werden Triisobutylaluminium und Triethylaluminium in einer Konzentration von 0,1 bis 10 mmol Al pro kg Reaktorinhalt eingesetzt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird das Katalysatorsystem in einer Konzentration, bezogen auf das Übergangsmetall von bevorzugt $10^{-3}$ bis $10^{-8}$, besonders bevorzugt $10^{-4}$ bis $10^{-7}$ mol Übergangsmetall pro $dm^3$ Lösemittel bzw. pro $dm^3$ Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern (z.B. Rohre) geeignet.

Mit dem erfindungsgemäßen Katalysatorsystem wird eine Katalysatoraktivität von 170 bis 250 kg PP/g Metallocen xh erreicht. Die erfindungsgemäßen Polymere weisen Schmelzpunkte von 158 bis 165°C auf. Die erfindungsgemäßen Polymere weisen Triaden Taktizitäten von 98,0 bis 99,5 % und Regiofehler von 0,05 bis 0,12 % auf.

Die Erfindung wird anhand einer Zeichung und Beispielen näher erläutert.

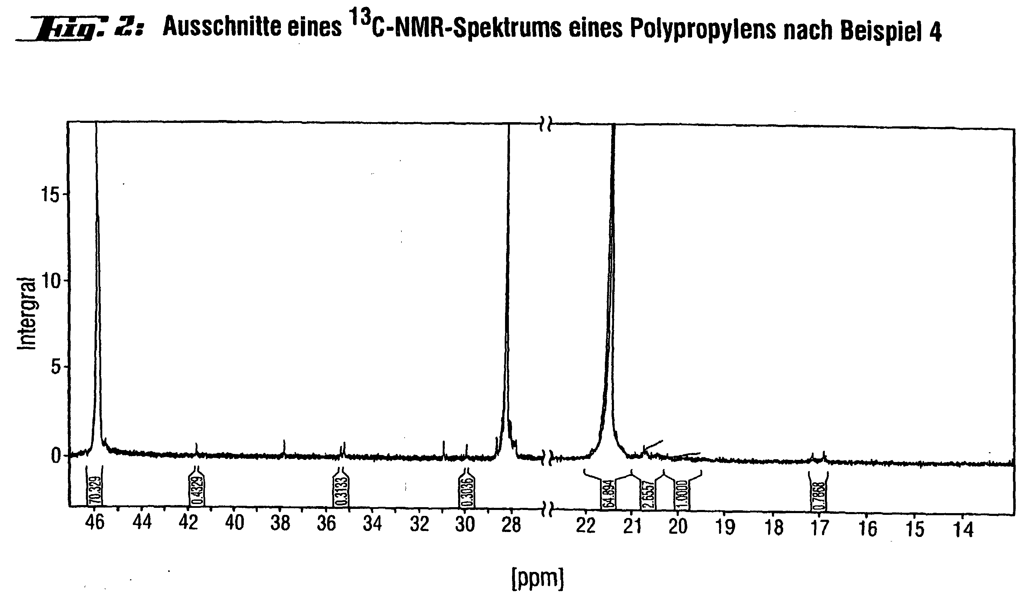

Die Zeichnung besteht aus Figur 1 und Figur 2.

Fig.1 zeigt Ausschnitte eines $^{13}C$-NMR-Spektrums (von 23 bis 13 ppm und von 47 bis 27 ppm) eines Polypropylens, das mit dem erfindungsgemäßen geträgerten Katalysator nach Beispiel 12 hergestellt wurde.

Fig.2 zeigt Ausschnitte eines $^{13}C$-NMR-Spektrums (von 23 bis 13 ppm und von 47 bis 27 ppm) eines Polypropylens, das mit geträgertem Katalysator "MAO auf $SiO_2$" analog EP 576 970 A1 nach Vergleichsbeispiel 4 hergestellt wurde.

Die Messung der $^{13}C$-NMR-Spektren wurde in einer Mischung aus $C_4Cl_6$ und $C_2D_2Cl_4$ bei 365 K und 100,6 MHz an einem Brucker AM 400 durchgeführt.

Aus der Tabelle 1 gehen die Auswertungen relevanter Resonanzsignale der $^{13}C$-NMR-Spektren hervor.

Tabelle 1

| | | Peaks | | | | | | | | |
|---|---|---|---|---|---|---|---|---|---|---|
| Probe 1 | ppm | 16,89 | 17,12 | 19,10 | 20,7 | 21,47 | 29,91 | 35,35 | 41,62 | 45,88 |
| (Fig. 1) | Itegral | 0,215 | 0,215 | 0,05 | 1,00 | 68,61 | 0,05 | 0,04 | 0,03 | 68,83 |
| | | Peaks | | | | | | | | |
| Probe 2 | ppm | 16,89 | 17,13 | 19,10 | 20,70 | 21,48 | 29,91 | 35,37 | 41,3 | 45,88 |
| (Fig. 2) | Integral | 0,395 | 0,395 | 1,00 | 2,66 | 64,80 | 0,30 | 0,31 | 0,43 | 70,33 |

Der Vergleich der NMR-Spektren der Proben 1 und 2 zeigt, daß sich für Probe 1 ein deutlich geringerer Anteil an 2-1-insertierten Propeneinheiten (RI = 0.06 %) ergibt als für Probe 2 (RI = 0,43 %). Das ist der Beweis für den niedrigeren Anteil an Regiofehlern in der Probe 1 verglichen mit der Probe 2.

Beispiele

Allgemeine Angaben: Die Herstellung und Handhabung der organometallischen Verbindungen erfolgte unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert. Als sphärische, poröse Trägermaterialien wurden Silicas eingesetzt wie z.B. MS-Typen der Fa. PQ Corporation, ES- oder EP-Typen der Fa. Crosfield, oder Silica-Typen 948, 952, 955 der Fa. Grace Davisson oder ähnliche.

Die Verbindungen wurden mit $^{1}$H-HMR, $^{13}$C-NMR und IR-Spektroskopie charakterisiert.

Beispiel 1:

Inertisierung des Trägermaterials:

10 g $SiO_2$ (ES 70, Fa. Crosfield Catalysts, getrocknet bei 140°C und 10 mbar) wurden tropfenweise unter Rühren langsam mit 40 ml 20%iger Trimethylaluminiumlösung in Varsol versetzt. Es wurde dann soviel Toluol zugesetzt, daß eine leicht rührbare Suspension entstand. Man ließ noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial bei 40°C getrocknet.

Herstellung des geträgerten Katalysatorsystems:

Parallel dazu wurden 4,5 mg (7,2 µmol) Dimethylsilandiylbis(2-methyl-4-phenylindenyl)zirkoniumdichlorid mit 10 $cm^3$ 30%iger (48,1 mmol) Methylaluminoxanlösung in Toluol und zusätzlichen 1,5 $cm^3$ Toluol vermischt und 15 Minuten gerührt.
1 g des inertisierten Trägermaterials wurde in Toluol resuspendiert und tropfenweise der obigen Metallocen/Methylaluminoxanlösung zugesetzt.
Das Reaktionsgemisch wurde 30 Minuten bei Raumtemperatur gerührt.
Anschließend wurde das Gemisch filtriert und der Feststoff 3 mal mit 10 $cm^3$ Hexan gewaschen. Der verbleibende, hexanfeuchte Filterrückstand wurde für die Polymerisation erneut in 20 $cm^3$ Hexan resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 50°C aufgeheizt (4°C/min) und das Polymerisationssystem 1 h durch Kühlung bei 50°C gehalten. Gestoppt wurde die Polymerisation durch Zusatz von 20 $cm^3$ Isopropanol. Das überschüssige Monomer wurde abgegast, das Polymer im Vakuum getrocknet.
Es resultierten 1,01 kg Polypropylen-Pulver. Der Reaktor zeigte keine Beläge an Innenwand oder Rührer. Die Katalysaloraktivität betrug 242 kg PP/g
Metallocen x h.
VZ = 793 $cm^3$/g; Schmp. = 160°C; $M_w$ = 1155000; $M_w/M_n$ = 3,2; SD = 356 g/$dm^3$.

Beispiel 2:

Die Synthese des geträgerten Katalysatorsystems aus Beispiel 1 wurde wiederholt mit dem Unterschied, daß 5 $cm^3$ 30 %ige (24 mmol) Methylaluminoxanlösung in Toluol und 1,8 mg Dimethylsilandiylbis(2-methyl-4-phenylindenyl) zirkoniumdichlorid (2,9 µmol Zr) und 3 g inertisiertes Trägermaterial verwendet wurden.

Die Polymerisation erfolgte analog zu Beispiel 1 bei 70°C. Es resultierten 480 g Polypropylen-Pulver. Der Reaktor zeigte keine Beläge an Innenwand oder Rührer.
Die Katalysatoraktivität betrug 267 kg PP/g Metallocen x h. VZ = 811 $cm^3$/g; Schmp. = 161 °C; $M_w$ = 1182000 g/mol; $M_w/M_n$ = 3,2; SD = 343 g/$dm^3$.

Beispiel 3:

Die Synthese des geträgerten Katalysatorsystems aus Beispiel 1 wurde wiederholt mit dem Unterschied, daß

70 $cm^3$ 30 %ige (337 mmol) Methylaluminoxanlösung in Toluol und 2,5 g inertisiertes Trägermaterial und 44,2 mg Dimethylsilandiylbis(2-methyl-4-phenylindenyl)zirkoniumdichlorid (70,3 µmol Zr) verwendet und das Reaktionsgemisch 60 Minuten bei Raumtemperatur gerührt wurde. Anschließend wurde der Feststoff abfiltriert und 3 mal mit 50 $cm^3$ Hexan gewaschen.
Der verbleibende, hexanfeuchte Filterrückstand wurde am Vakuum zu einem frei fließenden, blaßrosa Pulver getrocknet. Man erhielt 5,36 g geträgerten, trockenen Katalysator.
Für die Polymerisation wurden von diesem trockenen Katalysator 2 g (16,5 mg = 26,2 µmol Zr) erneut in 20 $cm^3$ Hexan resuspendiert.
Die Polymerisation erfolgte analog zu Beispiel 1 bei 70°C.
Es resultierten 3,93 kg Polypropylen-Pulver. Der Reaktor zeigte keine Beläge an Innenwand oder Rührer. Die Katalysatoraktivität betrug 238 kg PP/g Metallocen x h. VZ = 824 $cm^3$/g; Schmp. = 160°C; $M_w$ = 1194000 g/mol; $M_w/M_n$ = 3,0; SD = 377 g/$dm^3$.

Beispiel 4:

Inertisierung des Trägermaterials:

10 g $SiO_2$ (ES 70, Fa. Crosfield Catalysts, getrocknet bei 140°C und 10 mbar) wurden tropfenweise unter Rühren langsam mit 40 ml 20%iger Triisobutylaluminiumlösung in Varsol versetzt. Es wurde dann soviel Toluol zugesetzt, daß eine leicht rührbare Suspension entstand. Man ließ noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial getrocknet.

Herstellung des geträgerten Katalysatorsystems:

Parallel dazu wurden 4,5 mg Dimethylsilandiylbis(2-methyl-4-phenylindenyl)zirkoniumdichlorid 7,2 µmol mit 1 $cm^3$ 30 %iger (4,81 mmol) Methylaluminoxanlösung in Toluol sowie mit zusätzlichen 2 $cm^3$ Toluol vermischt und 15 Minuten gerührt. Die in Toluol resuspendierten 1 g inertisierten Trägermaterials wurden nun tropfenweise mit der obigen vorbereiteten Metallocen/Methylaluminoxanlösung in Toluol versetzt.
Das Reaktionsgemisch wurde 30 Minuten bei Raumtemperatur gerührt. Anschließend wurde das Gemisch filtriert und der Feststoff 3 mal mit 10 $cm^3$ Hexan gewaschen. Der verbleibende, hexanfeuchte Filterrückstand wurde für die Polymerisation erneut in 20 $cm^3$ Hexan resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propyleh befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt. Anschließend wurde die Katalysator-Suspension in den Reaktor gegeben, auf die Polymerisationstemperatur von 50°C aufgeheizt (4°C/min) und das Polymerisationssystem 1 h durch Kühlung bei 50°C gehalten. Gestoppt wurde die Polymerisation durch Zusatz von 20 $cm^3$ Isopropanol. Das überschüssige Monomer wurde abgegast, das Polymer im Vakuum getrocknet.
Es resultierten 895 g Polypropylen-Pulver. Der Reaktor zeigte keine Beläge an Innenwand oder Rührer. Die Katalysatoraktivität betrug 199 kg PP/g Metallocen x h.
VZ = 812 $cm^3$/g; Schmp. = 161°C; $M_w$ = 1188000 g/mol; $M_w/M_n$ = 3,3; SD = 380 g/$dm^3$.

Beispiel 5:

Die Synthese des geträgerten Katalysatorsystems aus Beispiel 4 wurde wiederholt mit dem Unterschied daß 10 $cm^3$ 30 %ige Methylaluminoxanlösung in Toluol (48.1 mmol) und 44,2 mg Dimethylsilandiylbis(2-methyl-4-phenylindenyl)zirkoniumdichlorid (70,3 g µmol Zr) und 5 g inertisiertes Trägermaterial verwendet und das Reaktionsgemisch 60 Minuten bei Raumtemperatur gerührt wurde. Anschließend wurde der Feststoff abfiltriert und 3 mal mit 50 $cm^3$ Hexan gewaschen. Der verbleibende, hexanfeuchte Filterrückstand wurde am Vakuum zu einem frei fließenden, blaßrosa Pulver getrocknet. Man erhielt 5,4 g geträgerten trockenen Katalysator.
Für die Polymerisation wurden von diesem trockenen Katalysator 2 g (16,5 mg = 26,2 µmol Zr) erneut in 20 $cm^3$ Hexan resuspendiert.
Das Polymerisation erfolgte analog zu Beispiel 1 bei 70°C.
Es resultierten 3,2 kg Polypropylen-Pulver. Der Reaktor zeigte keine Beläge an Innenwand oder Rührer. Die Katalysatoraktivität betrug 194 kg PP/g Metallocen X h, VZ = 907 $cm^3$/g; Schmp. = 162°C; $M_w$ = 1329000 g/mol; $M_w/M_n$ =

3,3; SD = 397 g/$dm^3$.

Beispiel 6:

Inertisierung des Trägermaterials:

10 g $SiO_2$ (PQ MS 3030, Fa. PQ Corporation, getrocknet bei 140°C und 10 mbar) wurden tropfenweise unter Rühren langsam mit 40 ml 20%iger Trimethylaluminiumlösung in Varsol versetzt. Es wurde dann soviel Toluol zugesetzt, daß eine leicht rührbare Suspension entstand. Man ließ noch 10 Minuten rühren und filtriert dann vom Lösungsmittel ab. Der Filterrückstand wurde noch zweimal mit 10 ml Toluol gewaschen. Im Ölpumpenvakuum wurde das so vorbehandelte Trägermaterial bei Raumtemperatur getrocknet. Man erhielt 18 g inertisiertes Trägermaterial.
Parallel dazu wurden 4,5 mg (7,2 µmol Zr) Dimethylsilandiylbis(2-methyl-4-phenylindenyl)zirkoniumdichlorid mit 1 $cm^3$ 30 %iger (4,81 mmol) Methylaluminoxanlösung in Toluol vermischt und 15 Minuten gerührt.
1 g des inertisierten Trägermaterials wurden in Toluol resuspendiert und tropfenweise mit der obigen Metallocen/Methylaluminoxanlösung versetzt.
Das Reaktionsgemisch wurde 30 Minuten bei Raumtemperatur gerührt. Anschließend wurde das Gemisch filtriert und der Feststoff 3 mal mit 10 $cm^3$ Hexan gewaschen. Der verbleibende, hexanfeuchte Filterrückstand wurde für die Polymerisation erneut in 20 $cm^3$ Hexan resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt. Anschließend wurde die Katalysator-Suspension in den Reaktor gegeben, auf die Polymerisationstemperatur von 50°C aufgeheizt (4°C/min) und das Polymerisationssystem 1 h durch Kühlung bei 50°C gehalten. Gestoppt wurde die Polymerisation durch Zusatz von 20 $cm^3$ Isopropanol. Das überschüssige Monomer wurde abgegast, das Polymer im Vakuum getrocknet.
Es resultierten 990 g Polypropylen-Pulver. Der Reaktor zeigte keine Beläge an Innenwand oder Rührer. Die Katalysatoraktivität betrug 220 kg PP/g Metallocen x h. VZ = 868 $cm^3$/g; Schmp. = 160°C; $M_w$ = 1275000 g/mol; $M_w/M_n$ = 3,4; SD = 386 g/$dm^3$.

Beispiel 7:

Die Synthese des geträgerten Katalysatorsystems aus Beispiel 1 wurde wiederholt mit dem Unterschied, daß 5 $cm^3$ 30 %ige (24 mmol) Methylaluminoxanlösung in Toluol und 1,8 mg Dimethylsilandiylbis(2-methyl-4-phenylindenyl) zirkoniumdichlorid (2,9 µmol Zr) und 3 g inertisiertes Trägermaterial verwendet wurden.
Die Polymerisation erfolgte analog zu Beispiel 1 bei 70°C. Es resultierten 369 g Polypropylen-Pulver. Der Reaktor zeigte keine Beläge an Innenwand oder Rührer.
Die Katalysatoraktivität betrug 205 kg PP/g Metallocen x h. VZ = 842 $cm^3$/g; Schmp. = 160°C; $M_w$ = 1229000 g/mol; $M_w/M_n$ = 3,2; SD = 373 g/$dm^3$.

Beispiel 8:

10 g $SiO_2$ (PQ MS 3030, Fa PQ Corporation, getrocknet bei 140°C und 10 mbar) wurden tropfenweise unter Rühren langsam mit 40 ml 20%iger Triisobutylaluminiumlösung in Varsol versetzt. Es wurde dann soviel Toluol zugesetzt, daß eine leicht rührbare Suspension entstand. Man läßt noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial getrocknet.

Herstellung des geträgerten Katalysatorsystems:

Parallel dazu wurden 20 mg (32 µmol) Dimethylsilandiylbis(2-methyl-4-phenylindenyl)-zirkoniumdichlorid mit 3 $cm^3$ 30 %iger (14,43 mmol) Methylaluminoxanlösung sowie weiteren 20 ml Toluol vermischt. Man ließ noch 30 Min. rühren.
5 g des inertisierten Trägermaterials wurden nun tropfenweise unter starkem Rühren mit obiger Metallocen/Methylaluminoxanlösung versetzt und noch 15 Min gerührt. Das Gemisch wurde filtriert und der Feststoff dreimal mit 10 $cm^3$ Hexan gewaschen und im Ölpumpenvakuum getrocknet. Anschließend wurden 20 ml Toluol zugegeben und das Katalysatorsystem resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt. Anschließend wurde die Katalysator-Suspension in den Reaktor gegeben, auf die Polymerisationstemperatur von 70°C aufgeheizt (4°C/min) und das Polymerisationssystem 1 h durch Kühlung bei 70°C gehalten. Gestoppt wurde die Polymerisation durch Zusatz von 20 $cm^3$ Isopropanol. Das überschüssige Monomer wurde abgegast, das Polymer im Vakuum getrocknet.
Es resultierten 2,86 kg Polypropylen-Pulver. Der Reaktor zeigte keine Beläge an Innenwand oder Rührer. Die Katalysatoraktivität betrug 143 kg PP/g Metallocen x h. VZ = 946 $cm^3$/g; Schmp. = 162°C; $M_w$ = 1374000 g/mol; $M_w/M_n$ = 3,0; SD = 360 g/$dm^3$.

Beispiel 9

10 g $SiO_2$ (PQ MS 3030, Fa PQ Corporation, getrocknet bei 140°C und 10 mbar) wurden tropfenweise unter Rühren langsam mit 40 ml 20 %iger Trimethylaluminiumlösung in Varsol versetzt. Es wurde dann soviel Toluol zugesetzt, daß eine leicht rührbare Suspension entstand. Man ließ noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial getrocknet.
Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt.

Herstellung des geträgerten Katalysatorsystems:

20 mg (32 µmol) Dimethylsilandiylbis(2-methyl-4-phenylindenyl)-zirkoniumdichlorid wurden mit 3 ml 30 %iger (14,43 mmol) Methylaluminoxanlösung in Toluol und weiteren 20 ml Toluol vermischt. Bei Raumtemperatur ließ man noch 30 Min. rühren.
Diese Lösung wurde dann tropfenweise zu 5 g inertisiertem Trägermaterial gegeben. Man rührte noch weitere 15 Min. unter.
Anschließend wurde das Gemisch filtriert und der Feststoff dreimal mit 10 $cm^3$ Hexan gewaschen. Der verbleibende, hexanfeuchte Filterrückstand wurde für die Polymerisation erneut in 20 $cm^3$ Toluol resuspendiert.
Anschließend wurde die Katalysator-Suspension in den Reaktor gegeben, auf die Polymerisationstemperatur von 20°C aufgeheizt (4°C/min) und das Polymerisationssystem 1 h durch Kühlung bei 70°C aufgeheizt. Gestoppt wurde die Polymerisation durch Zusatz von 20 $cm^3$ Isopropanol. Das überschüssige Monomer wurde abgegast, das Polymer im Vakuum getrocknet.
Es resultierten 2,94 kg Polypropylen-Pulver. Der Reaktor zeigte keine Beläge an Innenwand oder Rührer. Die Katalysatoraktivität betrug 147 kg PP/Kg Metallocen x h. VZ = 842 $cm^3$/g; Schmp. = 160°C, $M_w$ = 1217000 g/mol; $M_w/M_n$ = 2,9; SD = 356 g/$dm^3$.

Beispiel 10

10 g $SiO_2$ (PMQS 3030, Fa PQ Corporation, getrocknet bei 140°C und 10 mbar) wurden tropfenweise unter Rühren langsammit 40 ml 20 %iger Triisobutylaluminiumlösung in Varsol versetzt. Es wurde dann soviel Toluol zugesetzt, daß eine leicht rührbare Suspension entstand. Man ließt noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial getrocknet.
Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt.

Herstellung des geträgerten Katalysatorsystems:

20 mg (32 µmol) Dimethylsilandiylbis(2-methyl-4-phenylindenyl)-zirkoniumdichlorid wurden mit 3 ml 30 %iger (14,43 mmol) Methylaluminoxanlösung in Toluol und weiteren 20 ml Toluol vermischt. Bei Raumtemperatur ließ man noch 60 Min. rühren. Diese Lösung wurde dann tropfenweise zu 2 g inertisiertem Trägermaterial gegeben. Man rührte noch weitere 15 Min.
Anschließend wurde das Gemisch filtriert und der Feststoff einmal mit 10 $cm^3$ Hexan gewaschen. Der verbleibende

hexanfeuchte Rückstand wurde im Ölpumpenvakuum getrocknet und dann in 20 $cm^3$ Toluol resuspendiert.

Anschließend wurde die Katalysator-Suspension in den Reaktor gegeben, auf die Polymerisationstemperatur von 20°C aufgeheizt (4°C/min) und das Polymerisationssystem 1 h durch Kühlung bei 70°C aufgeheizt. Gestoppt wurde die Polymerisation durch Zusatz von 20 $cm^3$ Isopropanol. Das überschüssige Monomer wurde abgegast, das Polymer im Vakuum getrocknet.

Es resultierten 3,26 kg Polypropylen-Pulver. Der Reaktor zeigte keine Beläge an Innenwand oder Rührer. Die Katalysatoraktivität betrug 163 kg PP/g.
VZ = 910 $cm^3$/g; Schmp. = 162°C; $M_w$ = 1323000 g/mol; $M_w/M_n$ = 3,0; SD = 340 g/$dm^3$.

Beispiel 11

10 g $SiO_2$ (PMQS 3030, Fa PQ Corporation, getrocknet bei 140°C und 10 mbar) wurden tropfenweise unter Rühren langsammit 40 ml 20 %iger Trimethylaluminiumlösung in Varsol versetzt. Es wurde dann soviel Toluol zugesetzt, daß eine leicht rührbare Suspension entstand. Man ließt noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial getrocknet.
Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt.

Herstellung des geträgerten Katalysatorsystems:

20 mg (32 µmol) Dimethylsilandiylbis(2-methyl-4-phenylindenyl)-zirkoniumdichlorid wurden mit 3 ml 30 %iger (14,43 mmol) Methylaluminoxanlösung in Toluol und weiteren 20 ml Toluol vermischt. Bei Raumtemperatur ließ man noch 30 Min. rühren.
Diese Lösung wurde dann tropfenweise zu 2 g inertisiertem Trägermaterial gegeben. Man rührte noch weitere 15 Min. Anschließend wurde das Gemisch filtriert und der Feststoff einmal mit 10 $cm^3$ Hexan gewaschen. Der verbleibende hexanfeuchte Rückstand wurde im Ölpumpenvakuum getrocknet und dann in 20 $cm^3$ Hexan resuspendiert.

Anschließend wurde die Katalysator-Suspension in den Reaktor gegeben, auf die Polymerisationstemperatur von 20°C aufgeheizt (4°C/min) und das Polymerisationssystem 1 h durch Kühlung bei 70°C aufgeheizt. Gestoppt wurde die Polymerisation durch Zusatz von 20 $cm^3$ Isopropanol. Das überschüssige Monomer wurde abgegast, das Polymer im Vakuum getrocknet.

Es resultierten 3,3 kg Polypropylen-Pulver. Der Reaktor zeigte keine Beläge an Innenwand oder Rührer. Die Katalysatoraktivität betrug 165 kg PP/g.
VZ = 874 $cm^3$/g; Schmp. = 160°C; $M_w$ = 1254000 g/mol; $M_w/M_n$ = 2,9; SD = 375 g/$dm^3$.

Beispiel 12

10 g $SiO_2$ (PMQS 3030, Fa PQ Corporation, getrocknet bei 140°C und 10 mbar) wurden tropfenweise unter Rühren langsammit 40 ml 20 %iger Trimethylaluminiumlösung in Varsol versetzt. Es wurde dann soviel Toluol zugesetzt, daß eine leicht rührbare Suspension entstand. Man ließt noch 10 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial getrocknet.
Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt.

Herstellung des geträgerten Katalysatorsystems:

20 mg (32 µmol) Dimethylsilandiylbis(2-methyl-4-phenylindenyl)-zirkoniumdichlorid wurden mit 3 ml 30 %iger (14,43 mmol) Methylaluminoxanlösung in Toluol und weiteren 6 ml Toluol vermischt. Bei Raumtemperatur ließ man noch 30 Min. rühren.
Diese Lösung wurde dann tropfenweise zu 2 g inertisiertem Trägermaterial gegeben. Man rührte noch weitere 15 Min. und resuspendierte das Katalysatorsystem in 20 ml Toluol.

Anschließend wurde die Katalysator-Suspension in den Reaktor gegeben, auf die Polymerisationstemperatur von 20°C aufgeheizt (4°C/min) und das Polymerisationssystem 1 h durch Kühlung bei 70°C aufgeheizt. Gestoppt wurde die Polymerisation durch Zusatz von 20 $cm^3$ Isopropanol. Das überschüssige Monomer wurde abgegast, das Polymer im Vakuum getrocknet.

Es resultierten 3,42 kg Polypropylen-Pulver. Der Reaktor zeigte keine Beläge an Innenwand oder Rührer. Die Katalysatoraktivität betrug 171 kg PP/g.
VZ = 868 $cm^3$/g; Schmp. = 161°C; $M_w$ = 1254000 g/mol; $M_w/M_n$ = 3,2; SD = 360 g/$dm^3$.

Als Vergleichsbeispiele 1 bis 3 wurden die Beispiele 3, 4 und 5 aus der Patentanmeldung EP 576 970 A1 in die Beschreibung aufgenommen.

Vergleichsbeispiel 1:

22 $cm^3$ der Suspension des "MAO auf $SiO_2$" (49 mmol Al) wurden unter Argon in eine G3-Schlenkfritte eingefüllt und mit einer Lösung von 4,5 mg Dimethylsilandiylbis(2-methyl-4-phenvl-indenyl)zirkondichlorid in 10 $cm^3$ Toluol (7,2 µmol Zr) versetzt.
Das Reaktionsgemisch wurde 30 Minuten bei Raumtemperatur gerührt, wobei eine spontane Farbänderung nach rot allmählich verblaßte. Anschließend wurde das Gemisch filtriert und der Feststoff 3 mal mit 10 $cm^3$ Hexan gewaschen. Der verbleibende, hexanfeuchte Filterrückstand wurde für die Polymerisation erneut in 20 $cm^3$ Hexan resuspendiert.
Parallel dazu wurde ein trockener 16-$dm^3$-Reaktor zunächst mit Stickstoff und anschließend mit Propylen gespült und mit 10 $dm^3$ flüssigem Propylen befüllt.
Dann wurden 3 $cm^3$ Triisobutylaluminium (pur, 12 mmol) mit 30 $cm^3$ Hexan verdünnt, in den Reaktor gegeben und der Ansatz bei 30°C 15 Minuten gerührt.
Anschließend wurde die Katalysator-Suspension in den Reaktor gegeben, auf die Polymerisationstemperatur von 50°C aufgeheizt (4°C/min) und das Polymerisationssystem 1 h durch Kühlung bei 50°C gehalten. Gestoppt wurde die Polymerisation durch Zusatz von 20 $cm^3$ Isopropanol. Das überschüssige Monomer wurde abgegast, das Polymer im Vakuum getrocknet.
Es resultierten 300 g Polypropylen- Pulver. Der Reaktor zeigte keine Beläge an Innenwand oder Rührer. Die Katalysatoraktivität betrug 67 kg PP/g Metallocen x h. VZ = 1380 $cm^3$/g; Schmp. = 156°C.

Vergleichsbeispiel 2:

Die Synthese des geträgerten Katalysatorsystems aus Vergleichsbeispiel 1 wurde wiederholt mit dem Unterschied, daß 13 $cm^3$ (29 mmol Al) der Suspension "MAO auf $SiO_2$" und 1,8 mg rac-5 (2,9 µmol Zr) verwendet wurden. Die Polymerisation erfolgte analog zu Vergleichsbeispiel 1 bei 70°C. Es resultierten 420 g Polypropylen-Pulver. Der Reaktor zeigte keine Beläge an Innenwand oder Rührer. Die Katalysatoraktivität betrug 233 kg PP/g Metallocen x h. VZ = 787 $cm^3$/g; Schmp. = 149,5°C.

Vergleichsbetspiel 3:

Die Synthese des geträgerten Katalysatorsystems aus Vergleichsbeispiel 1 wurde wiederholt mit dem Unterschied, daß 150 $cm^3$ (335 mmol Al) der Suspension "MAO auf $SiO_2$" und 44,2 mg rac-5 (70,3 µmol Zr) verwendet und das Reaktionsgemisch 60 Minuten bei Raumtemperatur gerührt wurde.

Anschließend wurde der Feststoff abfiltriert und 3 mal mit 50 $cm^3$ Hexan gewaschen. Der verbleibende, hexanfeuchte Filterrückstand wurde am Vakuum zu einem frei fließenden, blaßrosa Pulver getrocknet. Man erhielt 33,3 g geträgerten, trockenen Katalysator.
Für die Polymerisation wurden von diesem trockenen Katalysator 2,98 g (4 mg = 6,3 µmol Zr) erneut in 20 $cm^3$ Hexan resuspendiert.
Die Polymerisation erfolgte analog zu Vergleichsbeispiel 1 bei 70°C.
Es resultierten 1,05 kg Polypropylen-Pulver. Der Reaktor zeigte keine Beläge an Innenwand oder Rührer. Die Katalysatoraktivität betrug 263 kg PP/g Metallocen x h. VZ = 944 $cm^3$/g; Schmp. = 156°C.

Vergleichsbeispiel 4:

Herstellung des geträgerten Katalysatorsystems:

6,5 $cm^3$ der Suspension "MAO auf $SiO_2$" (14,4 mmol Al) wurden in eine G3-Schlenkfritte eingefüllt und mit einer Lösung von 20 mg (32 µmol) Dimethylsilandiylbis(2-methyl-4-phenylindenyl)-zirkoniumdichlorid in 10 $cm^3$ Toluol und weiteren 20 ml Toluol vermischt. Bei Raumtemperatur ließ man noch 30 Min. rühren.
Anschließend wurde das Gemisch filtriert und der Feststoff dreimal mit 10 $cm^3$ Hexan gewaschen. Der verbleibende, hexanfeuchte Filterrückstand wurde für die Polymerisation erneut in 20 $cm^3$ Hexan resuspendiert.

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30

$cm^3$ Hexan verdünnt in den Reaktor gegeben und der Ansatz bei 30°C 15 Minuten gerührt.

Anschließend wurde die Katalysator-Suspension in den Reaktor gegeben, auf die Polymerisationstemperatur von 20°C aufgeheizt (4°C/min) und das Polymerisationssystem 1 h durch Kühlung bei 70°C aufgeheizt. Gestoppt wurde die Polymerisation durch Zusatz von 20 $cm^3$ Isopropanol. Das überschüssige Monomer wurde abgegast, das Polymer im Vakuum getrocknet.

Es resultierten 3,45 kg Polypropylen-Pulver. Der Reaktor zeigte keine Beläge an Innenwand oder Rührer. Die Katalysatoraktivität betrug 172 kg PP/g Metallocen x h. Schmp. = 149°C; VZ = 872 $cm^3$/g; $M_w$ = 1290000 g/mol; $M_w/M_n$ = 2,9; SD = 410 g/$dm^3$.

Vergleichsbeispiel 5:

Herstellung des geträgerten Katalysatorsystems

5 g $SiO_2$ (PQMS 3030, Fa PQ Corporation, getrocknet bei 140°C und 10 mbar) wurden in 30 ml Toluol suspendiert und mit obiger Metallocen/MAO/Toluol-Lösung versetzt.
20 mg (32 µmol) Dimethylsilandiylbis(2-methyl-4-phenylidenyl)-zirkoniumdichlorid wurden mit 3 ml 30 %iger (14,43 mmol) Methylaluminoxanlösung in Toluol und weiteren 10 ml Toluol vermischt. Bei Raumtemperatur ließ man noch 30 Min. rühren.

Parallel dazu wrude ein trockener 16-$dm^3$-Reaktor zunächst mit Stickstoff und anschließend mit Propylen gespült und mit 10 $dm^3$ flüssigem Propylen befüllt. Dann wurden anstatt 3 $cm^3$ 13 $cm^3$ 20 %ige Triisobutylaluminiumlösung in Vargol, in den Reaktor gegeben und der Ansatz bei 30°C 15 Minuten gerührt.

Anschließend wurde die Katalysator-Suspension in den Reaktor gegeben, auf die Polymerisationstemperatur von 20°C aufgeheizt (4°C/min) und das Polymerisationssystem 1 h durch Kühlung bei 70°C aufgeheizt. Gestoppt wurde die Polymerisation durch Zusatz von 20 $cm^3$ Isopropanol. Das überschüssige Monomer wurde abgegast, das Polymer im Vakuum getrocknet.

Es resultierten 3,58 kg Polypropylen-Pulver. Der Reaktor zeigte keine Beläge an Innenwand oder Rührer. Die Katalysatoraktivität betrug 179 kg PP/g.
VZ = 910 $cm^3$/g; Schmp. = 149°C; $M_w$ = 13280000 g/mol; $M_w/M_n$ = 3,3;
SD = 95 g/$dm^3$.

Aus der nachstehend aufgeführten Tabelle 2 geht hervor welche Beispiele mit welchen Vergleichsbeispielen verglichen werden.

Tabelle 2

| Beispiele | Vergleichsbeispiel |
|---|---|
| 1,4,6 | 1 |
| 2, 7 | 2 |
| 3, 5 | 3 |
| 8, 9, 10, 11, 12 | 4, 5 |

Aus der nachstehend aufgeführten Tabelle 3 gehen die charakteristischen Daten des Katalysatorsystems und der erhaltenen Polymere hervor.

Tabelle 3

| Beispiele (B)/ Vergleichs-Beispiele (V) | Kat. Activ[1)] | VZ[2)] | Schmp. [3)] | $M_w$[4)] | $M_w/M_n$[5)] | SD[6)] | TT[7)] | RI[8)] |
|---|---|---|---|---|---|---|---|---|
| B1 | 242 | 793 | 160 | 1155000 | 3,2 | 356 | 98,2 | 0,09 |
| B2 | 267 | 811 | 161 | 1182000 | 3,2 | 343 | 98,7 | 0,09 |
| B3 | 238 | 824 | 160 | 1194000 | 3,0 | 377 | 98,2 | 0,11 |
| B4 | 199 | 812 | 161 | 1188000 | 3,3 | 380 | 99,3 | 0,10 |
| B5 | 194 | 907 | 162 | 1329000 | 3,3 | 397 | 99,5 | 0,07 |
| B6 | 220 | 868 | 160 | 1275000 | 3,4 | 386 | 98,5 | 0,08 |
| B7 | 205 | 842 | 160 | 1229000 | 3,2 | 373 | 98,2 | 0,09 |
| B8 | 143 | 946 | 162 | 1374000 | 3,0 | 360 | 99,5 | 0,06 |
| B9 | 147 | 842 | 160 | 1217000 | 2,9 | 356 | 98,9 | 0,10 |
| B10 | 163 | 910 | 162 | 1323000 | 3,0 | 340 | 99,1 | 0,09 |
| B11 | 165 | 874 | 160 | 1254000 | 2,9 | 375 | 99,2 | 0,11 |
| B12 | 171 | 868 | 161 | 125000 | 3,2 | 360 | 98,5 | 0,06 |
| V1 | 67 | 1380 | 156 | - | - | - | - | - |
| V2 | 223 | 787 | 149,5 | - | - | - | - | - |
| V3 | 263 | 944 | 156 | - | - | - | - | - |
| V4 | 172 | 872 | 149 | 1290000 | 2,9 | 410 | 94,7 | 0,43 |
| V5 | 179 | 910 | 149 | 1328000 | 3,3 | 395 | 95,4 | 0,49 |

1) Katalysatoraktivität in kg PP/g Metallocen xh
2) Viskositätszahl in $cm^3/g$
3) Schmelzpunkt in °C; ermittelt mit DSC, 20°C/min Aufheiz-/Abkühlgeschwindigkeit; zweites Heizen
4) Molmassengewichtsmittel in g/mol; ermittelt durch Gelpermeationschromatographie
5) Polydispersität
6) Polymerschüttdichte in $g/dm^3$
7) Triaden-Taktizität TT = mm/(mm+mr+rr)•100 in %; ermittelt durch $^{13}C$-NMR-Spektroskopie
8) Regiofehler in %; ermittelt durch $^{13}C$-NMR-Spektroskopie

Der Vergleich zwischen den erfindungsgemäß durchgeführten Beispielen B1 bis B12 und den nach dem Stand der Technik durchgeführten Beispielen V1 bis V4 zeigte folgende Vorteile der Erfindung.

1. Es wurden erfindungsgemäße Polymere mit Schmelzpunkten von 160°C bis 162°C im Vergleich zu 149°C bis 156°C erhalten.

2. Der Anteil an 2-1-insertierten Propeneinheiten (RI) war in den erfindungsgemäßen Polymeren deutlich niedriger.

Der Vergleich zwischen den Beispielen B1 bis B12 und Vergleichsbeispiel V5 zeigte, daß Polymere mit hohen Schmelzpunkten (≥ 160°C) nur bei Verwendung von inertisiertem Trägermaterial erhalten wurden.

## Patentansprüche

1. Katalysatorsystem, enthaltend mindestens ein Metallocen, mindestens einen Cokatalysator und mindestens ein inertisiertes anorganisches Oxid als Träger, wobei das inertisierte anorganische Oxid erhältlich ist durch

a) Trocknung bei 100°C bis 800°C bei 0,01 bar bis 0,001 bar oder bei 100°C bis 800°C im Inertgasstrom für 5-15 h, um physisorbiertes Wasser so zu entfernen, daß das so getrocknete Trägermaterial < 1,5 Gew.-% Wasser und 0,1 bis 6 Gew.-% Silanolgruppen enthält, und

b) Umsetzung des so erhaltenen Produkts mit mindestens einer metallorganischen Verbindung,

und das Metallocen die allgemeine Formel I aufweist,

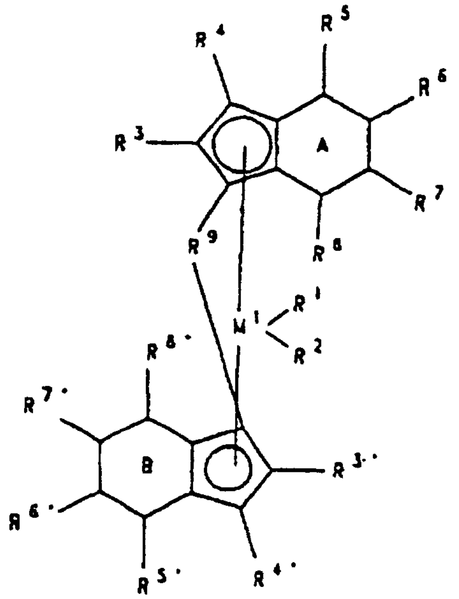

(I)

worin

| | |
|---|---|
| $M^1$ | ein Metall der Gruppe IVb des Periodensystems der Elemente ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{20}$-Arylgruppe, eine $C_6$-$C_{10}$-Aryloxygruppe, eine $C_2$-$C_{10}$-Alkenylgruppe, eine OH-Gruppe, eine $NR^{12}_2$-Gruppe, wobei $R^{12}$ eine $C_1$ bis $C_2$ Alkylgruppe oder $C_6$ bis $C_{14}$-Arylgruppe ist, oder ein Halogenatom bedeuten, |
| $R^3$ bis $R^8$ und $R^{3'}$ bis $R^{8'}$ | gleich oder verschieden sind und ein Wasserstoffatom, eine $C_1$-$C_{40}$-Kohlenwasserstoffgruppe, die linear, cyclisch oder verzweigt sein kann, z.B. eine $C_1$-$C_{10}$-Alkylgruppe, $C_2$-$C_{10}$-Alkenylgruppe, $C_6$-$C_{20}$-Arylgruppe, eine $C_7$-$C_{40}$-Arylalkylgruppe, eine $C_7$-$C_{40}$-Alkylarylgruppe oder eine $C_8$-$C_{40}$-Arylalkenylgruppe, bedeuten, oder benachbarte Reste $R^4$ bis $R^8$ und/oder $R^{4'}$ bis $R^{8'}$ mit den sie verbindenden Atomen ein Ringsystem bilden, |
| $R^9$ | eine Verbrückung bedeutet, bevorzugt |

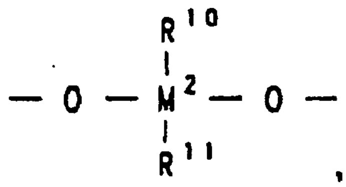, 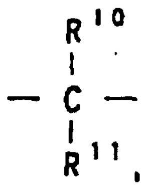, 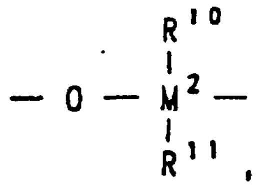, 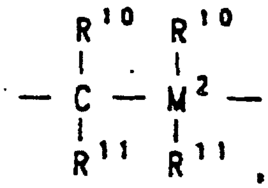,

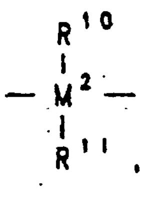, 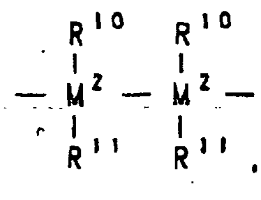, 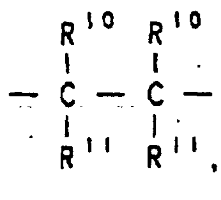, 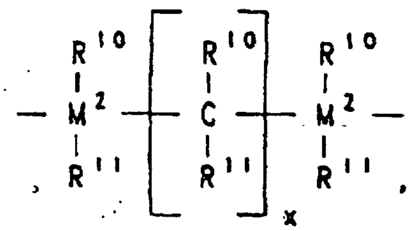,

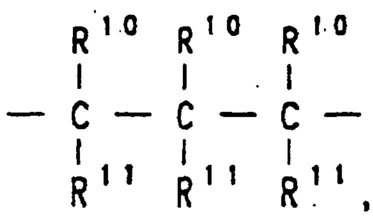,

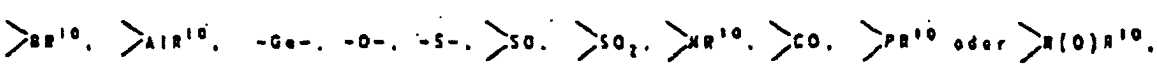

wobei $R^{10}$ und $R^{11}$ gleich oder verschieden sind und ein Wasserstoffatom, ein Halogenatom oder eine $C_1$-$C_{40}$-kohlenstoffhaltige Gruppe ist wie eine $C_1$-$C_{20}$-Alkyl-, eine $C_1$-$C_{10}$-Fluoralkyl-, eine $C_1$-$C_{10}$-Alkoxy-, eine $C_6$-$C_{14}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe oder $R^{10}$ und $R^{11}$ jeweils mit den sie verbindenden Atomen einen oder mehrere Ringe bilden und x eine ganze Zahl von Null bis 18 ist,
$M^2$ Silizium, Germanium oder Zinn ist, und die Ringe A und B gleich oder verschieden gesättigt oder ungesättigt sind und
$R^9$ auch zwei Einheiten der Formel I miteinander verknüpfen kann,
und die Indenyl- bzw. Tetrahydroindenylliganden in 2-, 2,4-, 4,7-, 2,6-, 2,4,6-, 2,5,6-, 2,4,5,6- oder 2,4,5,6,7-Stellung substituiert sind.

2. Katalysatorsystem nach Anspruch 1, enthaltend mindestens ein Metallocen ausgewählt aus Dimethylsilandiylbis(2-methylindenyl)zirkoniumdichlorid, Dimethylsilandiylbis(2-methyl-4-(1-naphthyl)-indenyl)zirkoniumdichlorid, Dimethylsilandiylbis(2-methyl-4-phenylindenyl)zirkoniumdichlorid, Dimethylsilandiylbis(2-methyl-4-a-acenaphthindenyl)zirkoniumdichlorid, Dimethylsilandiylbis(2-ethyl-4-phenylindenyl)zirkoniumdichlorid, Dimethylsiandiylbis(2-methyl-4,5-benzoindenyl)zirkoniumdichlorid, Dimethylsilandiylbsi(2-methyl-4,6-diisopropylindenyl)zirkoniumdichlorid.

3. Katalysatorsystem nach Anspruch 1 oder 2, wobei die metallorganische Verbindung mindestens eine Verbindung aus der Gruppe der aluminiumorganischen, magnesiumorganischen und bororganischen Verbindungen ist.

4. Katalysatorsystem nach den Ansprüchen 1 bis 3, wobei der Cokatalysator mindestens eine Verbindung vom Typ eines Aluminoxans, einer Lewis-Säure oder einer ionischen Verbindung, die durch Reaktion mit einem Metallocen dieses in eine kationische Verbindung überführt, ist.

**5.** Verfahren zur Herstellung eines Katalysatorsystems, enthaltend mindestens ein Metallocen der in Anspruch 1 definierten allgemeinen Formel I, mindestens einen Cokatalysator und mindestens ein inertisiertes anorganisches Oxid als Träger durch Umsetzung des inertisierten Oxids mit mindestens einem Metallocen und mindestens einem Cokatalysator, wobei das inertisierte anorganische Oxid erhältlich ist durch

a) Trocknung bei 100°C bis 800°C bei 0,01 bar bis 0,001 bar oder bei 100°C bis 800°C im Inertgasstrom für 5-15 h, um physisorbiertes Wasser so zu entfernen, daß das so getrocknete Trägermaterial < 1,5 Gew.-% Wasser und 0,1 bis 6 Gew.-% Silanolgruppen enthält, und
b) Umsetzung des so erhaltenen Produkts mit mindestens einer metallorganischen Verbindung.

**6.** Verfahren zur Herstellung eines Polyolefins durch Polymerisation von Olefinen der Formel $R^u$-CH=CH-$R^v$, worin $R^u$ und $R^v$ gleich oder verschieden sind und ein Wasserstoffatom oder einen kohlenstoffhaltigen Rest mit 1 bis 20 C-Atomen bedeuten und $R^u$ und $R^v$ zusammen mit den sie verbindenden Atomen einen oder mehrere Ringe bilden können, bei einer Temperatur im Bereich von -60 bis 250°C und einem Druck im Bereich von 0,5 bis 2000 bar in Gegenwart eines Metallocen-Katalysatorsystems nach den Ansprüchen 1 bis 4.

## Claims

**1.** A catalyst system comprising at least one metallocene, at least one cocatalyst and at least one passivated inorganic oxide as support, wherein the passivated inorganic oxide is obtainable by

a) drying at from 100°C to 800°C and from 0.01 bar to 0.001 bar or at from 10000 to 800°C in a stream of inert gas for 5-15 hours to remove physisorbed water so that the dried support material contains < 1.5% by weight of water and from 0.1 to 6% by weight of silanol groups, and
b) reaction of the product obtained in this way with at least one organometallic compound,

and the metallocene has the formula I,

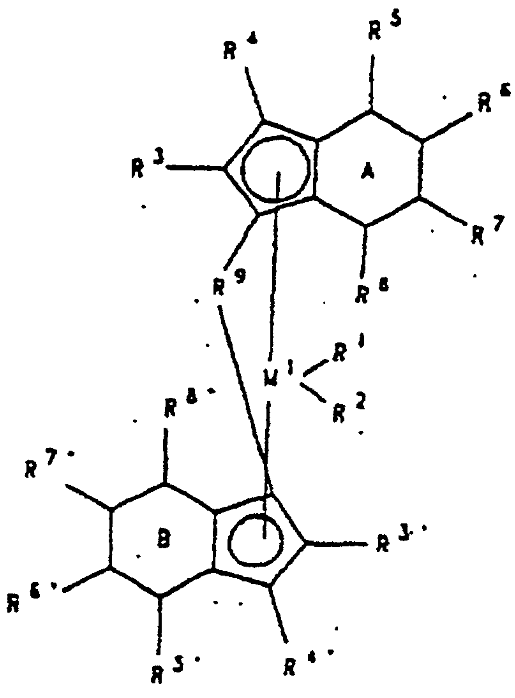

(I)

where

| | |
|---|---|
| $M^1$ | is a metal of group IVb of the Periodic Table of the Elements, |
| $R^1$ and $R^2$ | are identical or different and each a hydrogen atom, a $C_1$-$C_{10}$-alkyl group, a $C_1$-$C_{10}$-alkoxy group, a $C_6$-$C_{20}$-aryl group, a $C_6$-$C_{10}$-aryloxy group, a $C_2$-$C_{10}$-alkenyl group, an |

OH group, an $NR^{12}_2$ group, where $R^{12}$ is a $C_1$-$C_2$-alkyl group or $C_6$-$C_{14}$-aryl group, or a halogen atom,

$R^3$ to $R^8$ and $R^{3'}$ to $R^{8'}$ are identical or different and are each a hydrogen atom, a $C_1$-$C_{40}$-hydrocarbon group which may be linear, cyclic or branched, e.g. a $C_1$-$C_{10}$-alkyl group, a $C_2$-$C_{10}$-alkenyl group, a $C_6$-$C_{20}$-aryl group, a $C_7$-$C_{40}$-arylalkyl group, a $C_7$-$C_{40}$-alkylaryl group or a $C_8$-$C_{40}$-arylalkenyl group, or adjacent radicals $R^4$ to $R^8$ and/or $R^{4'}$ to $R^{8'}$ together with the atoms connecting them form a ring system,

$R^9$ is a bridge, preferably

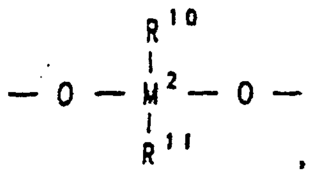, 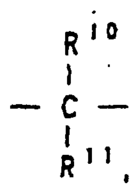, 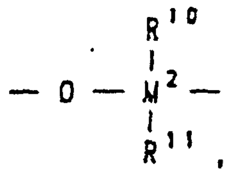, 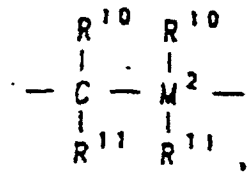,

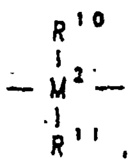, 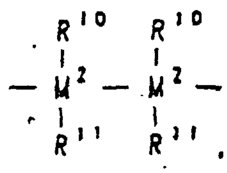, 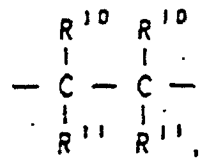, 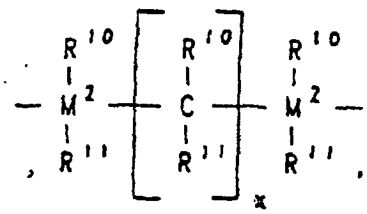,

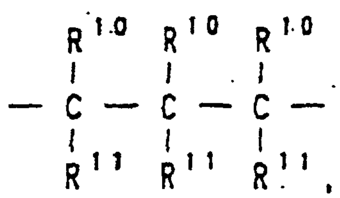,

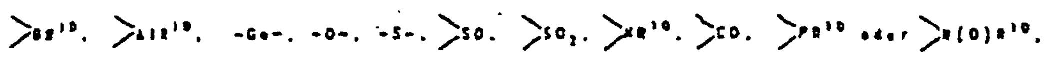

where $R^{10}$ and $R^{11}$ are identical or different and are each a hydrogen atom, a halogen atom or a $C_1$-$C_{40}$ group such as a $C_1$-$C_{20}$-alkyl group, a $C_1$-$C_{10}$-fluoroalkyl group, a $C_1$-$C_{10}$-alkoxy group, a $C_6$-$C_{14}$-aryl group, a $C_6$-$C_{10}$-fluoroaryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group or $R^{10}$ and $R^{11}$ together with the atoms connecting them form one or more rings and x is an integer from zero to 18,

$M^2$ is silicon, germanium or tin, and the rings A and B are, independently of one another, saturated or unsaturated and

$R^9$ may also link two units of the formula I,

and the indenyl or tetrahydroindenyl ligands are substituted in the 2 position, the 2,4 positions, the 4,7 positions, the 2,6 positions, the 2,4,6 positions, the 2,5,6 positions, the 2,4,5,6 positions or the 2,4,5,6,7 positions.

2. A catalyst system as claimed in claim 1 comprising at least one metallocene selected from among dimethylsilanediylbis(2-methylindenyl)zirconium dichloride, dimethylsilanediylbis(2-methyl-4-(1-naphthyl)indenyl)zirconium dichloride, dimethylsilanediylbis (2-methyl-4-phenylindenyl)zirconium dichloride, dimethylsilanediylbis(2-methyl-4-α-acenaphthindenyl)zirconium dichloride, dimethylsilanediylbis (2-ethyl-4-phenylindenyl)zirconium dichloride, dimethylsilanediylbis(2-methyl-4,5-benzoindenyl)zirconium dichloride, dimethylsilanediylbis (2-methyl-4,6-diisopropylindenyl)zirconium dichloride.

3. A catalyst system as claimed in claim 1 or 2, wherein the organometallic compound is at least one compound selected from the group consisting of organoaluminum, organomagnesium and organoboron compounds.

4. A catalyst system as claimed in any of claims 1 to 3, wherein the cocatalyst is at least one compound such as an aluminoxane, a Lewis acid or an ionic compound which reacts with a metallocene to convert it into a cationic compound.

5. A process for preparing a catalyst system comprising at least one metallocene of the formula I defined in claim 1, at least one cocatalyst and at least one passivatived inorganic oxide as support by reacting the passivated oxide with at least one metallocene and at least one cocatalyst, wherein the passivated inorganic oxide is obtainable by

a) drying at from 100°C to 800°C and from 0.01 bar to 0.001 bar or at from 100°C to 800°C in a stream of inert gas for 5-15 hours to remove physisorbed water so that the dried support material contains < 1.5% by weight of water and from 0.1 to 6% by weight of silanol groups, and
b) reaction of the product obtained in this way with at least one organometallic compound.

6. A process for preparing a polyolefin by polymerization of olefins of the formula $R^u$-CH=CH-$R^v$, where $R^u$ and $R^v$ are identical or different and are each a hydrogen atom or a carbon-containing radical having from 1 to 20 carbon atoms and $R^u$ and $R^v$ together with the atoms connecting them may form one or more rings, at from -60 to 250°C and a pressure in the range from 0.5 to 2000 bar in the presence of a metallocene catalyst system as claimed in any of claims 1 to 4.

## Revendications

1. Système de catalyseur contenant au moins un métallocène, au moins un co-catalyseur et au moins un oxyde inorganique inertisé comme support, l'oxyde inorganique inertisé pouvant être obtenu par :

a) séchage de 100°C jusqu'à 800°C sous 0,01 bar jusqu'à 0,001 bar ou à 100°C à 800°C dans un courant de gaz inerte pendant 5 - 15 h, pour éliminer ainsi l'eau physisorbée, de telle sorte que la matière support ainsi séchée contienne moins de 1,5 % en poids d'eau et de 0,1 à 6% en poids de groupes silanol, et
b) réaction du produit ainsi obtenu avec au moins une combinaison organométallique,

et le métallocène répondant à la formule générale:

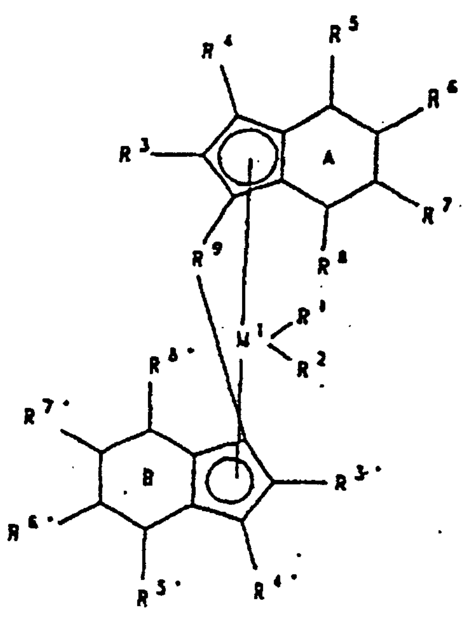

(I)

dans laquelle

$M^1$ est un métal du groupe IV b de la Classification périodique des Eléments,
$R^1$ et $R^2$ sont identiques ou différents et représentent un atome d'hydrogène, un groupe alkyle en $C_{1-10}$, un groupe alcoxy en $C_1$-$C_{10}$, un groupe aryle en $C_6$-$C_{20}$, un groupe aryloxy en $C_6$-$C_{10}$, un groupe alcényle en $C_2$-$C_{10}$, un groupe OH, un groupe $NR^{12}_2$, $R^{12}$ représentant un groupe alkyle en $C_1$ à $C_2$ ou un groupe aryle en $C_6$ à $C_{14}$, ou un atome d'halogène,
$R^3$ à $R^8$ et $R^{3'}$ à $R^{8'}$ sont identiques ou différents et représentent un atome d'hydrogène , un groupe hydrocarboné en $C_1$-$C_{40}$, qui peut être linéaire, cyclique ou ramifié, par exemple un groupe alkyle en $C_1$-$C_{10}$, un groupe alcényle en $C_2$-$C_{10}$, un groupe aryle en $C_6$-$C_{20}$, un groupe arylalkyle en $C_7$-$C_{40}$, un groupe alkylaryle en $C_7$-$C_{40}$, ou un groupe arylalcényle en $C_8$-$C_{40}$, ou des restes $R^4$ à $R^8$ et /ou $R^{4'}$ à $R^{8'}$ voisins forment, avec les atomes qui les relient , un système cyclique.
$R^9$ est une création de pont, de préférence:

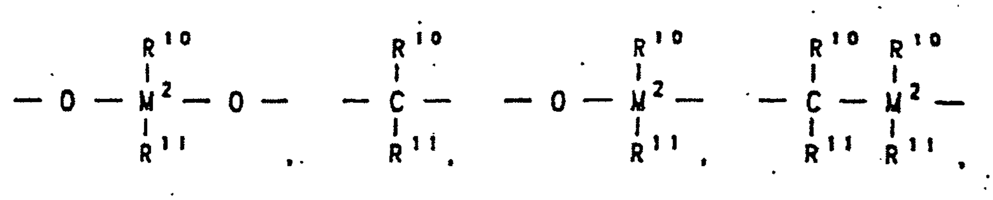

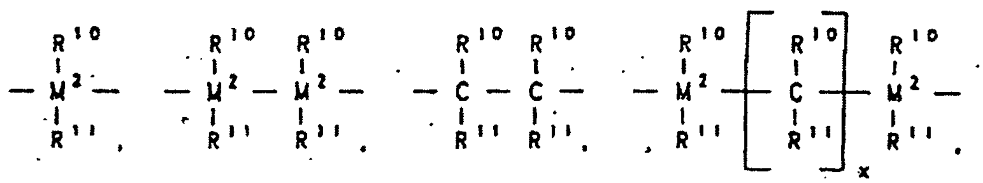

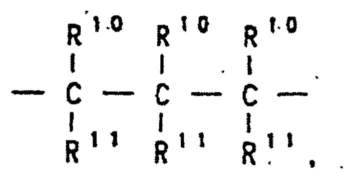

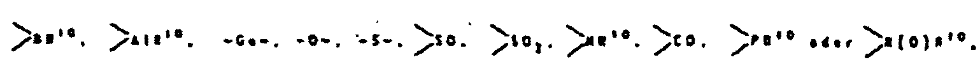

où $R^{10}$ et $R^{11}$ sont identiques ou différents et représentent un atome d'hydrogène, un atome d'halogène ou un groupe carboné en $C_1$-$C_{40}$, comme un groupe alkyle en $C_1$-$C_{20}$, un groupe fluoroalkyle en $C_1$-$C_{10}$, un groupe alcoxy en $C_1$-$C_{10}$, un groupe aryle en $C_6$-$C_{14}$, un groupe fluoroaryle en $C_6$-$C_{10}$, un groupe aryloxy en $C_6$-$C_{10}$, un groupe alcényle en $C_2$-$C_{10}$, un groupe alcényle en $C_2$-$C_{10}$, un groupe arylalkyle en $C_7$-$C_{40}$, un groupe alkylaryle en $C_7$-$C_{40}$, ou un groupe arylalcényle en $C_8$-$C_{40}$, ou $R^{10}$ et $R^{11}$ forment à chaque fois avec les atomes qui les relient un ou plusieurs cycle(s) et x est un nombre entier de 0 à 18,
$M^2$ est silicium, germanium ou étain et les cycles A et B sont identiques ou différents, saturés ou insaturés, et $R^9$ peut aussi relier ensemble deux unités de formule 1 et les coordinats indényle et tétrahydroindényle sont substitués dans les positions 2-, 2,4-, 4,7-, 2,6-, 2,4,6-, 2,5,6-, 2,4,5,6- ou 2,4,5,6,7-.

**2.** Système de catalyseur selon la revendication 1 contenant au moins un métallocène choisi parmi:

chlorure de diméthylsilandiylbis(2-méthyl-indényl)zirconium
dichlorure de diméthylsilandiylbis(2-méthyl-4-(1-naphthyl)-indényl) zirconium
chlorure de diméthylsilandiylbis(2-méthyl-4-phényl-indényl)zirconium
chlorure de diméthylsilandiylbis(2-méthyl-4-$\alpha$-acénaphthindényl)zirconium
chlorure de diméthylsilandiylbis(2-éthyl-4-phényl-indényl)zirconium
chlorure de diméthylsilandiylbis(2-méthyl-4,5-benzo-indényl)zirconium
chlorure de diméthylsilandiylbis(2-méthyl-4,6-diisopropyl-indényl)zirconium

3. Système de catalyseur selon la revendication 1 ou 2 , dans lequel la combinaison organométallique est au moins une combinaison appartenant au groupe des combinaisons organo-aluminium, organo-magnésium ou organo-bore.

4. Système de catalyseur selon les revendications 1 à 3, le co-catalyseur étant au moins une combinaison du type aluminoxane, un acide de Lewis ou une combinaison ionique, qui transforme ce dernier par réaction avec un métallocène , en une combinaison cationique.

5. Procédé pour la préparation d'un système de catalyseur contenant au moins un métallocène répondant à la formule générale 1 définie dans la revendication 1, au moins un co-catalyseur et au moins un oxyde inorganique inertisé comme support, par réaction de l'oxyde inertisé avec au moins un métallocène et au moins un co-catalyseur, l'oxyde inorganique inertisé pouvant être produit par :

a) séchage de 100°C jusqu'à 800°C sous 0,01 bar à 0,001 bar ou de 100°C jusqu'à 800°C dans un courant de gaz inerte pendant 5 - 15 h, pour éliminer ainsi l'eau physisorbée de telle sorte que la matière support ainsi séchée contienne moins de 1,5 % en poids d'eau et de 0,1 à 6% en poids de groupes silanol, et
b) réaction du produit ainsi obtenu avec au moins une combinaison organométallique.

6. Procédé de fabrication d'une polyoléfine par polymérisation d'oléfines de formule $R^u$-CH=CH-$R^v$, dans laquelle $R^u$ et $R^v$ sont identiques ou différents et représentent un atome d'hydrogène ou un reste carboné de 1 à 20 atome(s) de carbone et $R^u$ et $R^v$ peuvent former ensemble un ou plusieurs cycle(s) avec les atomes qui les relient, à une température dans la plage de -60 à 250°C et sous une pression dans la plage de 0,5 à 2000 bar(s), en présence d'un système de catalyseur à base de métallocène selon les revendications 1 à 4.

**Fig. 1:** Ausschnitte eines $^{13}C$-NMR-Spektrums eines Polypropylens nach Beispiel 12

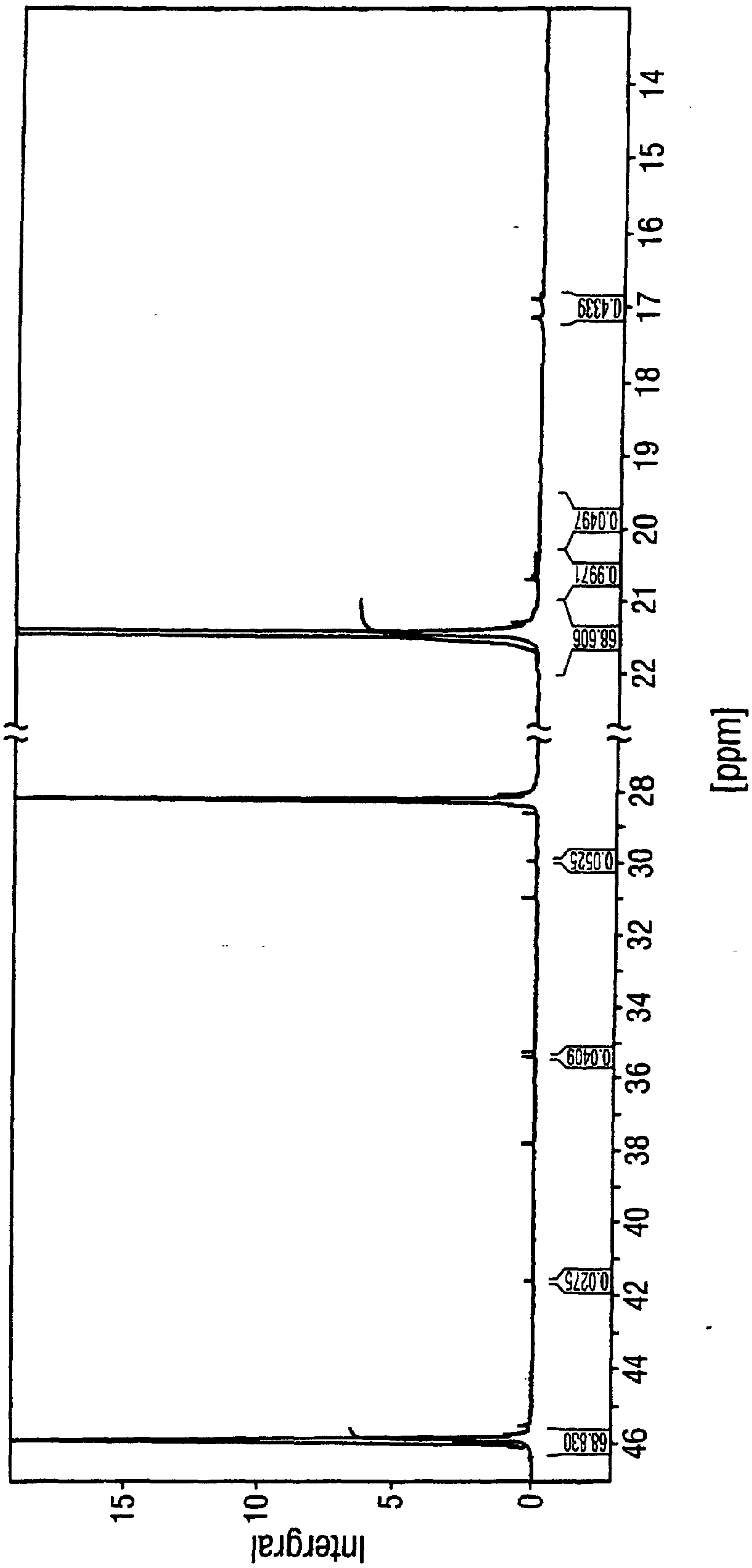

**Fig. 2:** Ausschnitte eines $^{13}C$-NMR-Spektrums eines Polypropylens nach Beispiel 4